# EUROPÄISCHE PATENTSCHRIFT

(11) **EP 3 659 231 B1**
(45) Veröffentlichungstag und Bekanntmachung des Hinweises auf die Patenterteilung: **31.08.2022**
(21) Anmeldenummer: 18745903.7
(22) Anmeldetag: 24.07.2018
(51) Int. Cl.: H02J 1/10, H02J 7/00, H02J 7/02

(54) **LADESTATION MIT DYNAMISCHER LADESTROMVERTEILUNG**
CHARGING STATION WITH DYNAMIC CHARGING CURRENT DISTRIBUTION
STATION DE CHARGE AVEC DISTRIBUTION DE COURANT DE CHARGE DYNAMIQUE

(30) Priorität: 26.07.2017 DE 102017116886
(43) Veröffentlichungstag der Anmeldung: 03.06.2020
(73) Patentinhaber: Wobben Properties GmbH, 26607 Aurich (DE)
(72) Erfinder: BROMBACH, Johannes, 13437 Berlin (DE); STRAFIEL, Christian, 26607 Aurich (DE); GERTJEGERDES, Stefan, 26603 Aurich (DE)
(74) Vertreter: Eisenführ Speiser
(86) Internationale Anmeldenummer: PCT/EP2018/069986
(87) Internationale Veröffentlichungsnummer: WO 2019/020600

(56) Entgegenhaltungen:
- EP-A1- 2 110 923
- EP-A1- 2 751 902
- EP-A1- 2 784 899
- EP-A2- 2 388 884
- WO-A1-2013/137501
- CN-A- 104 810 894
- CN-A- 105 449 791
- CN-A- 106 564 399
- JP-A- H05 276 673

## Beschreibung

Die vorliegende Erfindung betrifft eine Ladestation zum Laden mehrerer Elektrofahrzeuge, insbesondere Elektroautomobile. Die vorliegende Erfindung betrifft auch ein Verfahren zum Laden mehrerer Elektrofahrzeuge.

Mit steigender Anzahl im Straßenverkehr zugelassener Elektrofahrzeuge ist zukünftig damit zu rechnen, dass ein flächendeckender Ausbau der Infrastruktur zum Laden von Elektrofahrzeugen benötigt wird. Eine besondere Anforderung an eine Ladeinfrastruktur ist es dabei, die Elektrofahrzeuge in möglichst kurzer Zeit aufladen zu können. Insbesondere in Gebieten mit einem hohen Aufkommen an Elektrofahrzeugen kann mit einem besonders hohen Bedarf an Schnellladesystemen gerechnet werden. Beispiele für solche Gebiete sind Autobahnraststätten oder Innenstadtbereiche in einer Großstadt, in denen keine langen Standzeiten von den Elektrofahrzeugen erwünscht sind.

Beim Aufbau bzw. der Auslegung einer Ladestation treten dabei technologische Herausforderungen auf, denen begegnet werden muss. Ein Problem beim Betreiben einer Ladestation zum Laden von Elektrofahrzeugen ist zum Beispiel, dass unterschiedliche Fahrzeugtypen die an die Ladesäulen bzw. Ladeterminals der Ladestation angeschlossen werden, sehr unterschiedliche Anforderungen an den Ladestrom und die Ladespannungen aufweisen. Bei einigen Fahrzeugtypen kann beispielsweise ein sehr hoher Ladestrom bei einer Schnellladung benötigt werden, der aber auch schnell wieder absinkt. Bei anderen Fahrzeugtypen wird hingegen ein relativ konstanter Strom über einen längeren Zeitraum benötigt. Da die Ladeterminals in der Regel darauf ausgelegt sind alle Fahrzeugtypen laden zu können, wäre eine Ladesäule somit im Mittel nur relativ schwach ausgelastet. Das Ladeterminal würde dann nämlich nicht immer seinen maximalen Ladestrom an ein Elektrofahrzeug abgegeben, weil das Elektrofahrzeug ihn nicht oder nur zeitweise anfordert.

Das Deutsche Patent- und Markenamt hat in der Prioritätsanmeldung zu vorliegender Anmeldung folgenden Stand der Technik recherchiert: WO 2013/137501 A1, JP H05-276673 A, US 2010/0106631 A1, US 2014/0320083 A1 und US 2013/0057209 A1.

Das Dokument CN 104 810 894 A offenbart eine Gleichstromladesäule, bei der mehrere Gleichrichter jeweils eine Ladesäule versorgen und ausgangsseitig zusammengeschaltet werden können, um unterschiedliche Leistungen zu laden.

Aufgabe der vorliegenden Erfindung ist es somit, zumindest eines der oben genannten Probleme zu adressieren. Insbesondere soll eine Lösung vorgeschlagen werden, die zumindest eine bessere Auslastung der Ladeterminals in der Ladestation ermöglicht. Zumindest soll zu bisher bekannten Lösungen eine alternative Lösung vorgeschlagen werden.

Erfindungsgemäß wird somit eine Ladestation nach Anspruch 1 vorgeschlagen. Diese ist zum Laden mehrerer Elektrofahrzeuge, insbesondere Elektroautomobile, vorgesehen.

Somit umfasst die Ladestation eine Versorgungseinrichtung, insbesondere zum Anschließen an ein elektrisches Versorgungsnetz, um die Ladestation mit elektrischer Leistung zu versorgen. Die Ladestation bezieht somit elektrische Leistung bzw. elektrische Energie aus dem elektrischen Versorgungsnetz und stellt sie den Ladeterminals bereit. Dazu kann die Versorgungseinrichtung an ein elektrisches Versorgungsnetz angeschlossen sein, insbesondere über einen Transformator. Zudem kann in der Versorgungseinrichtung ein Gleichrichter vorgesehen, um aus dem elektrischen Versorgungsnetz bezogenen Wechselstrom gleichzurichten und den Ladeterminals bereitzustellen. Die Versorgungseinrichtung kann auch einen Energiespeicher, insbesondere eine Batterie aufweisen, um elektrische Energie zu puffern.

Neben der Versorgungseinrichtung umfasst die Ladestation zudem mehrere Ladeterminals. Die Ladeterminals, die besonders auch als Ladesäule ausgebildet werden können, sind feststehende Terminals, an denen - ähnlich zu Tanksäulen einer herkömmlichen Tankstelle - die Elektrofahrzeuge über ein Ladekabel zum Laden angeschlossen werden können. Es ist bevorzugt vorgesehen, dass auch mehrere Elektrofahrzeuge an ein Ladeterminal angeschlossen werden können. Das Anschließen kann dabei auch gleichzeitig erfolgen. Gemäß einer Ausführungsform können zwei Elektrofahrzeuge gleichzeitig zum Laden an dasselbe Ladeterminal angeschlossen werden.

Jedes Ladeterminal umfasst dabei einen Versorgungseingang, der synonym auch als Versorgungseingangsbereich bezeichnet werden kann, zum Beziehen elektrischer Leistung von der Versorgungseinrichtung. Das kann direkt oder indirekt erfolgen. Somit ist jedes Ladeterminal elektrisch mit der Versorgungseinrichtung gekoppelt und bezieht eine von der Versorgungseinrichtung bereitgestellte Leistung am Versorgungseingang.

Neben dem Versorgungseingang umfasst jedes Ladeterminal zudem einen Ladeausgang, der synonym auch als Ladeausgangsbereich bezeichnet werden kann, mit mehreren Ladeanschlüssen zum Abgeben jeweils eines Ladestroms zum Laden jeweils eines angeschlossenen Elektrofahrzeuges. Es wird also vorgeschlagen, dass jedes Ladeterminal wenigstens einen Ladeanschluss aufweist, wobei an jeden Ladeanschluss jeweils ein Elektrofahrzeug angeschlossen werden kann. Die Anzahl der Ladeanschlüsse entspricht somit der Anzahl der an das Terminal anschließbaren Elektrofahrzeuge. Der Ladeanschluss ist dabei ein Anschlusspunkt am Ladeterminal an den beispielsweise ein Ladekabel angeschlossen ist, um ein Elektrofahrzeug mit dem Terminal zu verbinden. Ein solches Ladekabel kann auch als Teil des Anschlusspunktes angesehen werden.

Als einen weiteren Bestandteil des Ladeterminals werden mehrere Gleichstromsteller vorgeschlagen, der zwischen dem Versorgungseingang und dem Ladeausgang des Ladeterminals angeordnet ist, um aus der elektrischen Leistung der Versorgungseinrichtung jeweils einen Stromstellerstrom zu erzeugen und diesen auch zu steuern. Der Gleichstromsteller kann auch vereinfachend und synonym als Stromsteller bezeichnet werden.

Sind bspw. zwei Gleichstromsteller in einem Ladeterminal vorhanden und im Wesentlichen zueinander parallel zwischen dem Versorgungseingang und dem Ladeausgang angeschlossen, können zwei Stromstellerströme unabhängig voneinander jeweils von einem Gleichstromsteller erzeugt werden. Der Gleichstromsteller wandelt dabei über den Versorgungseingang bezogene und von der Versorgungseinrichtung bereitgestellte erste Gleichspannung bzw. den ersten Gleichstrom in einen für die Elektrofahrzeuge angepassten zweiten Gleichstrom. Ein typischer Leistungsbereich des Gleichstromstellers, der auch als DC-DC-Wandler bezeichnet werden kann, ist 50 kW, wobei der Wandler einen Stromstellerstrom von bspw. 125 A bei 400 V Gleichspannung oder 62,5 A bei 800 V Gleichspannung erzeugen kann. Dies sind typische Werte für einen Ladestrom, mit denen Elektrofahrzeuge geladen werden können.

Es kommt somit auch in Betracht und wird vorgeschlagen, dass wenigstens ein Gleichstromsteller, insbesondere alle Gleichstromsteller, intern so veränderbar, insbesondere umschaltbar sind, dass sie jeweils ihre Spannungshöhe je nach Anforderung des zu ladenden Fahrzeugs ändern. Besonders wird vorgeschlagen, dass sie jeweils ihre Spannung verdoppeln bzw. halbieren können, bei gleichzeitigem Halbieren bzw. Verdoppeln ihres abgegebenen Stromes.

Jeder Ladestrom, der an einem Ladeanschluss zum Laden eines Elektrofahrzeugs verwendet wird, wird dabei aus einem Stromstellerstrom oder mehreren Stromstellerströmen gebildet. Umfasst ein Ladeterminal bspw. zwei Gleichstromsteller und zwei Ladeanschlüsse, ist das Ladeterminal dazu eingerichtet, einen überlagerten Ladestrom aus zwei Stromstellerströmen an einem der beiden Ladeanschlüsse zu erzeugen, wenn dies gefordert ist. Ist in einem konkreten Beispiel nur ein Elektrofahrzeug an ein Ladeterminal mit zwei Ladeanschlüssen angeschlossen, können somit beide Gleichstromsteller zum Laden des Fahrzeugs verwendet werden. Sind in einem weiteren Beispiel zwei Fahrzeuge gleichzeitig an das Ladeterminal angeschlossen, können die Fahrzeuge auch getrennt mit jeweils nur einem Stromstellerstrom als Ladestrom aufgeladen werden. Somit kann das Ladeterminal in einer vorteilhaften Weise die intern verbauten Gleichstromsteller ideal zum Laden eines Elektrofahrzeugs zusammen ausnutzen und diese zu- und wegschalten. Das ist besonders dann interessant, wenn nur ein Elektrofahrzeug zum Laden angeschlossen ist, das einen hohen Ladestrom bzw. eine hohe Ladeleistung benötigt. Hier kann die hohe Ladeleistung dann bspw. mit den exemplarisch genannten zwei Gleichstromstellern bereitgestellt werden.

Neben der Möglichkeit die Stromstellerströme mehrerer Gleichstromsteller jeweils nur eines Ladeterminals zum Laden eines Elektrofahrzeugs zu nutzen, ist es erfindungsgemäß vorgesehen, dass die Ladeterminals untereinander an Austauschanschlüssen über elektrische Austauschleitungen verbunden sind, um darüber Stromstellerströme untereinander auszutauschen, so dass sich ein Ladestrom eines Ladeterminals aus mehreren Stromstellerströmen mehrerer Ladeterminals zusammensetzen kann.

Es wurde erkannt, dass unterschiedliche Fahrzeugtypen sehr unterschiedliche Anforderungen an die Ladeströme und Ladespannungen aufweisen. Bspw. sinkt der Ladestrom bei einer Schnellladung bei manchen Autotypen sehr schnell mit der Zeit ab. Eine einzelne Ladesäule, welche bspw. für eine derartige Schnellladung konzipiert ist, ist somit im Mittel nur sehr schwach ausgelastet. In einem einfachen Beispiel weist ein Elektrofahrzeug einen Ladestrombedarf von zwei Stromstellerströmen auf. Nach kurzer Zeit sinkt dieser Strombedarf dann aber so ab, dass nur noch ein Stromstellerstrom zum Laden benötigt wird, da das Fahrzeug zum Beispiel bereits zu 80% aufgeladen ist. Die Ladesäule, die einen solchen zweiten Stromstellerstrom geliefert hat und dann nicht mehr zu liefern braucht, kann diesen dann anderweitig vorsehen. Sie kann ihren dann ungenutzten Stromstellerstrom an ein anderes Ladeterminal über die Austauschleitungen zur Verfügung stellen, oder einen Ladestrom an ihrem eigenen Ladeausgang bereitstellen.

Zur besseren Ausnutzung der Ladeterminals wird somit eine Lösung vorgeschlagen, die es ermöglicht, die Stromstellerströme dynamisch über Austauschleitungen auf der Ladeseite der Terminals untereinander auszutauschen, je nachdem welcher Leistungs- bzw. Strombedarf von den Fahrzeugen benötigt wird. Somit kann auch ein Elektrofahrzeug einen Stromstellerstrom aus einem benachbarten Ladeterminal beziehen, obwohl an dieses benachbarte Terminal bspw. kein Fahrzeug angeschlossen ist. Die erfindungsgemäße Ladestation ermöglicht es somit, dass der zum Laden der Elektrofahrzeuge verwendete Ladestrom auch aus benachbarten Ladeterminals direkt bezogen werden kann bzw. auch, dass wenn kein hoher Ladestrom zum Laden eines Elektrofahrzeugs benötigt wird, Stromstellerströme einem anderen Ladeterminal bereitgestellt werden können. Es kann nicht nur erreicht werden, die verfügbare Leistung variabel aufzuteilen, sondern es kann auch mit kleineren oder mittleren Gleichstromstellern variabel eine Ladung eines Elektrofahrzeugs vorgenommen werden, das einen Ladestrom benötigt, der deutlich höher ist, als jeder einzelne Gleichstromsteller liefern könnte. Es können also auch Kosten bei den Gleichstromstellern gespart werden.

Eine Besonderheit dieser Variabilität ist, dass diese örtlich bei den Ladeterminals erreicht wird. Dabei ist zu beachten, dass durch das Zusammenlegen mehrerer Stromstellerströme zu einem großen Ladestrom auch entsprechend ausgelegte Leitungen benötigt werden, die solch hohe Ströme leiten können. Bei Stromstärken von mehreren 100A sind die Anforderungen an solche Leitungen hoch. Es werden aber solch hohe Ströme nur bei bestimmten Fahrzeugen und dann auch nur für einen kurzen Zeitraum benötigt. Es müssen aber alle Leitungen, die grundsätzlich in Betracht kommen, solche hohen Ströme zu übertragen, auch für so hohe Ströme ausgelegt sein. Die meisten Leitungen sind dann für die meiste Zeit stark überausgelegt. Die erfindungsgemäße Lösung erreicht, dass dies nur im Bereich der Ladeterminals nötig ist. Die Leitungen können dazu bspw. als Stromschienen zwischen den Ladestationen ausgebildet sein. Besonders entfallen hierdurch überausgelegte Leitungen zwischen der Versorgungseinrichtung und den Ladeterminals.

Das wird dadurch erreicht, dass flexible Verschaltungen besonders im Bereich der Ladeterminals durchgeführt werden. Die Vermeidung überdimensionierter bzw. überausgelegter Leitungen besonders zwischen der Versorgungseinrichtung und den Ladeterminals wird dadurch erreicht. Es wird dazu die flexible Verschaltung, um bedarfsabhängig Stromstellerströme zusammenzufassen, also zu addieren, im Bereich der Ladeterminals durchgeführt.

Vorzugsweise wird vorgeschlagen, dass die Ladestation wenigstens ein Zusatzstromterminal aufweist, zum Erzeugen eines oder mehrerer zusätzlicher Stromstellerströme, um diese wenigstens einem Ladeterminal bereitzustellen. Dabei weist das Zusatzstromterminal selbst keinen Ladeausgang auf. Dazu umfasst jedes Zusatzstromterminal einen dem Versorgungseingang eines Ladeterminals entsprechenden Versorgungseingang zum Beziehen elektrischer Leistung von der Versorgungseinrichtung, wenigstens einen dem Austauschanschluss eines Ladeterminals entsprechenden Austauschanschluss zum Übertragen von Stromstellerströmen an wenigstens eines der Ladeterminals, und wenigstens einen zwischen dem Versorgungseingang und dem wenigstens einen Austauschanschluss angeordneten und dem Gleichstromsteller des Ladeterminals entsprechenden Gleichstromsteller. Diese Anschlüsse sind vorgesehen, um aus elektrischer Leistung der Versorgungseinrichtung jeweils einen Stromstellerstrom zu erzeugen, wobei insbesondere der Gleichstromsteller des Zusatzstromterminals mit allen Austauschanschlüssen des Zusatzstromterminals verbunden ist, um den Stromstellerstrom an allen Austauschleitungen bereitstellen zu können.

Im Vergleich zum Ladeterminal wird das Zusatzstromterminal demnach nur dazu verwendet, zusätzliche Stromstellerströme an die Ladeterminals bereitzustellen. Reicht bspw. die Leistung eines Ladeterminals nicht aus, um einen Strombedarf decken zu können, den ein Elektrofahrzeug anfordert, kann das Zusatzstromterminal einen oder mehrere zusätzliche Stromstellerströme bereitstellen. Das Zusatzstromterminal wird dabei an den Austauschanschlüssen über die Austauschleitungen mit benachbarten Ladeterminals elektrisch verbunden. Das Zusatzstromterminal liefert demnach einen zusätzlichen Strom bzw. Stromstellerströme, wenn dies angefordert wird. Dazu ist das Zusatzstromterminal entsprechend den Ladeterminals dimensioniert, sodass baugleiche Gleichstromsteller im Zusatzstromterminal verwendet werden können.

In einer weiteren Ausführungsform weist die Ladestation wenigstens ein Versorgungsterminal auf, zum Empfangen elektrischer Leistung von der Versorgungseinrichtung und zum Weiterleiten an die Ladeterminals. Dabei umfasst jedes Versorgungsterminal -einen über eine Hauptversorgungsleitung mit der Versorgungseinrichtung verbundenen Hauptversorgungseingang, um darüber Leistung von der Versorgungseinrichtung zu beziehen. Zudem weist das Versorgungsterminal wenigstens einen Versorgungsausgang auf, um darüber von der Versorgungseinrichtung bezogene Leistung an die Ladeterminals und ggf. das wenigstens eine Zusatzstromterminal weiterzuleiten, insbesondere um Leistung an alle Ladeterminals weiterzuleiten. Dazu sind den Austauschanschlüssen der Ladeterminals und ggf. des wenigstens einen Zusatzstromterminals entsprechende Austauschanschlüsse an einem ersten und zweiten Verbindungsbereich des Versorgungsterminals vorhanden, um das Versorgungsterminal an wenigstens einem Verbindungsbereich mit jeweils einem benachbarten Ladeterminal und/oder ggf. Zusatzstromterminal zu verbinden, um wenigstens einen Stromstellerstrom durch das Versorgungsterminal hindurchleiten zu können. Die zwei Verbindungsbereiche können dabei beliebig am Terminal angeordnet sein, zum Beispiel auf einer rechten und einer linken Seite des Terminals oder auch ausschließlich auf der Rückseite eines Terminals.

Demnach ist das wenigstens eine Versorgungsterminal eine Art Anschluss- und Leistungsverteilungsterminal zum Verbinden der Versorgungseinrichtung mit den Ladeterminals bzw. den Zusatzstromterminals. An das Versorgungsterminal können dann die Ladeterminals oder das Zusatzstromterminal angeschlossen werden.

Im Vergleich zum Ladeterminal und Zusatzstromterminal weist das Versorgungsterminal dabei einen gesonderten Hauptversorgungseingang auf, um darüber Leistung von der Versorgungseinrichtung über eine Hauptversorgungsleitung zu beziehen. Diese Hauptversorgungsleitung ist dabei vorzugsweise als Hochleistungskabel ausgebildet, da die gesamte Leistung über die Hauptleitung bezogen wird, die von an die Elektrofahrzeuge bereitgestellt wird. Somit ist nur das Versorgungsterminal direkt mit der Versorgungseinrichtung verbunden. Das Zusatzstromterminal und die Ladeterminals hingegen sind indirekt über das Versorgungsterminal mit der Versorgungseinrichtung verbunden. Das Versorgungsterminal leitet somit die von der Versorgungseinrichtung bezogene Leistung an die an das Versorgungsterminal angeschlossenen Terminals weiter, bzw. verteilt sie.

Das Versorgungsterminal weist dabei keinen Gleichstromsteller auf.

Zusammengefasst werden somit drei unterschiedliche Terminals in einer bevorzugten Ausführungsform der Ladestation vorgeschlagen, nämlich das Ladeterminal zum Laden der Elektrofahrzeuge, das Zusatzstromterminal zum Bereitstellen von zusätzlichen Stromstellerströmen sowie das Versorgungsterminal zum Bereitstellen elektrischer Leistung der Versorgungseinrichtung an die Ladeterminals und ggf. Zusatzstromterminals.

Vorzugsweise weisen die Ladeterminals und das wenigstens eine Zusatzstromterminal baugleiche Versorgungseingänge auf. So können jeweils zwei der Versorgungseingänge miteinander verbunden werden, um dadurch jeweils elektrischen Versorgungsstrom bzw. einen Teil davon von einem Versorgungseingang zu einem benachbarten Versorgungseingang weiterzuleiten. Dabei kann jedes Ladeterminal und ggf. jedes Zusatzstromterminal einen Versorgungsstrom von einem benachbarten Ladeterminal, einem Zusatzstromterminal oder Versorgungsterminal erhalten. Dabei kann eine Versorgungsleitung auch durch ein Versorgungsterminal durchgeschleift werden.

Zusätzlich oder alternativ weisen die Versorgungseingänge jeweils baugleiche Anschlussmittel, insbesondere Steckverbindung auf. Die Versorgungseingänge beschreiben somit einen Abschnitt des jeweiligen Terminals, der auch als Bereich, insbesondere synonym als Eingangsbereich bezeichnet werden kann. Dies ist vorteilhaft, um von den Ladeterminals bzw. den Zusatzstromterminals und dem Versorgungsterminal jeweils wahlweise zwei Terminals austauschbar miteinander zu verbinden. Insbesondere bilden die alle miteinander verbindbare Ladeterminals, die Zusatzstromterminals und das Versorgungsterminal einen modularen Aufbau aus. Dazu weist auch das Versorgungsterminal dazu angepasste Austauschanschlüsse und zusätzlich oder alternativ Versorgungseingänge auf.

Vorteilhaft an den baugleichen Versorgungseingängen ist demnach, dass die Ladeterminals und die Zusatzstromterminals ähnlich zu einer langen Busleistung hintereinander geschaltet werden können, sodass die Ladestation beliebig erweiterbar ist. Die Ladestation kann somit komplett modular aus den Zusatzstromterminals, den Ladeterminals und dem Versorgungsterminal aufgebaut werden. Zudem ist besonders vorteilhaft an aufeinander angepasste Versorgungseingänge und Austauschanschlüsse, dass ein Terminal schnell ausgetauscht werden kann, falls dieses einen Defekt aufweist oder die Ladestation bei Bedarf erweitert werden soll.

Jedes Ladeterminal weist wenigstens ein steuerbares Schaltmittel auf. Die möglichen, steuerbaren Schaltmittel haben dabei unterschiedliche Funktionen und werden in ein Austauschschaltmittel, ein Ladeschaltmittel und ein Brückenschaltmittel unterschieden.

Ein Austauschschaltmittel ist ein Schaltmittel, das mit jeweils einem Austauschanschluss elektrisch verbunden ist, um den Austausch wenigstens eines Stromstellerstroms über das Austauschschaltmittel mit einem benachbarten Ladeterminal oder benachbarten Zusatzstromterminal zu steuern.

Ein Ladeschaltmittel ist ein Schaltmittel, das mit jeweils einem Ladeanschluss elektrisch verbunden ist, um das Abgeben eines Ladestroms an den Ladeanschluss zu schalten.

Ein Brückenschaltmittel ist ein Schaltmittel, das mit zwei Gleichstromstellern in einem Ladeterminal elektrisch verbunden ist, insbesondere über zwei Querleitungen, um eine Überlagerung der Stromstellerströme der beiden Gleichstromsteller zu steuern. Dadurch können auch weitere Stromstellerströme die anderweitig eine der beiden Querleitungen erreichen, bspw. von einem benachbarten Ladeterminal, aufgeschaltet werden.

Dabei sind die steuerbaren Schaltmittel im Wesentlichen oder ausschließlich ladeseitig zu den Ladeanschlüssen hin im Ladeterminal angeordnet, insbesondere um die Stromstellerströme dynamisch verteilen zu können und einen bedarfsgerechten Ladestrom an einem beliebigen Ladeanschluss erzeugen zu können.

Erfindungsgemäß wird vorgeschlagen, dass jedes Ladeterminal einen ersten und einen zweiten Verbindungsbereich mit jeweils mehreren Austauschanschlüssen aufweist. Dazu ist für jeden Austauschanschluss einer der Verbindungsbereiche eine Längsleitung vorgesehen, um den jeweiligen Austauschanschluss des einen Verbindungsbereiches mit jeweils einem Austauschanschluss des anderen Verbindungsbereiches elektrisch zu verbinden. So werden bei m Austauschanschlüssen des einen Verbindungsbereiches m Längsleitungen vorgesehen, die insbesondere elektrisch zueinander parallel verlaufen.

Der erste oder zweite Verbindungsbereich kann dabei ähnlich zu dem Verbindungsbereich der Versorgungseingänge beliebig am Terminal angeordnet sein, also beispielsweise auf einer rechten und/oder linken Seite oder ausschließlich auf der Rückseite des Terminals.

Zudem wird jedem Gleichstromsteller ein Ladeanschluss zugeordnet und für jeden Gleichstromsteller wird eine Querleitung vorgesehen, um den Gleichstromsteller mit dem Ladeanschluss zu verbinden, um den Stromstellerstrom an den zugeordneten Ladeanschluss zu übertragen. So werden bei n Gleichstromstellern n Querleitungen vorgesehen.

Außerdem ist vorgesehen, dass jede Längsleitung über einen Verbindungsknoten mit wenigstens einer der Querleitungen direkt verbunden ist. Darüber kann ein Stromstellerstrom, oder mehrere bereits überlagerte Stromstellerströme, eines weiteren Ladeterminals und/oder eines Zusatzstromterminals in die betreffende Querleitung eingeleitet werden.

Zusätzlich oder alternativ werden genau n-1 Brückenschaltmittel vorgesehen, um jeweils zwei Querleitungen elektrisch zu verbinden. Dadurch können die Stromstellerströme der beiden Querleitungen, die jeweils auch aus mehreren Stromstellerströmen überlagert sein können, zusammengeführt werden.

In einer besonderen Ausführungsform wird zusätzlich oder alternativ vorgeschlagen, dass jede Querleitung zu dem Ladeschaltmittel kein weiteres Schaltmittel aufweist. Jede Querleitung reicht somit von ihrem Gleichstromsteller zu ihrem Ladeanschluss, weist einen Schalter zum Ladeanschluss hin auf, aber keinen weiteren Schalter. Hier wurde besonders erkannt, dass auch ein flexibles Verschalten mehrerer Gleichstromsteller bzw. ihrer Querleitungen ohne zusätzliche Schaltmittel in den Querleitungen auskommt.

Außerdem wird zusätzlich oder alternativ vorgeschlagen, dass in jedem Ladeterminal eine Längsleitung mehr als Querleitungen vorgesehen sind, sodass gilt: m=n+1. Hierbei wurde erkannt, dass dadurch viele Ladeterminals und ggf. Zusatzstromterminals sehr variabel, aber mit vertretbarem Aufwand verschaltet werden können, insbesondere so, dass viele Stromstellerströme zwischen den Ladeterminals ausgetauscht und ggf. durch Stromstellerströme der Zusatzstromterminal ergänzt werden können. Durch so viele Längsleitungen wie Querleitungen kann jede Querleitung eines Ladeterminals mit einer anderen Längsleitung verbunden werden, als die übrigen Querleitungen. Durch die weitere Längsleitung besteht dann auch noch die Möglichkeit, einen oder mehrere Stromstellerströme durch das jeweilige Ladeterminal durchzuleiten.

Ferner wird gemäß einer weiteren besonderen Ausführungsform vorgeschlagen, dass eine Längsleitung in dem Ladeterminal mit zwei Querleitungen jeweils über einen Verbindungsknoten direkt verbunden ist, mit einem der Brückenschaltmittel zwischen den beiden Verbindungsknoten, oder mit nur einer Querleitung über einen Verbindungsknoten verbunden ist, ohne in dem Ladeterminal ein Brückenschaltmittel aufzuweisen. Damit kann die vorbeschriebene Flexibilität ohne großen Aufwand erreicht werden.

Zusammengefasst werden demnach Längs- und Querleitungen mit den unterschiedlichen steuerbaren Schaltmitteln derart innerhalb des Ladeterminals verschaltet, dass es diese Verschaltungsform in Art einer Matrixform ermöglicht, Stromstellerströme von benachbarten Terminals zu beziehen oder abzugeben, und auch alle Gleichstromsteller eines Ladeterminals intern nutzen zu können. Dabei wird aber eine vollständige Matrixform vermieden, indem nur sehr gezielt und nur an bestimmten Stellen Schaltmittel eingesetzt werden. Auch die Anzahl der Längsleitungen, die auch die Ladeterminals, ggf. auch Zusatzstromterminals, übergreifend verbinden, wird sehr gering gehalten. Besonders im Vergleich zu einer vollständigen Schaltmatrix, die für jede Querleitung der Ladestation, also nicht nur für jede eines Ladeterminals, eine Längsleitung aufweisen würde. Bei fünf Ladeterminals mit je zwei Gleichstromstellern, also je zwei Querleitungen, wären das 10 Längsleitungen, wohingegen gemäß einer vorgeschlagenen Ausführungsform für ein solches Beispiel nur 3 Längsleitung notwendig wären.

Es wird besonders ermöglicht, die zuvor beschriebene Verschaltungsform der Schaltmittel mit den Längs- und Querleitungen, dass die Anzahl der bereitgestellten Stromstellerströme nicht nur von dem Terminal an den ein Auto angeschlossen gesteuert werden kann, sondern auch benachbarte Terminals zum Aufladen eines Elektrofahrzeugs genutzt werden können.

In einer weiteren Ausführungsform wird vorgeschlagen, dass in der Ladestation wenigstens eine Steuereinheit vorgesehen ist, die dazu vorbereitet ist, die Ladeterminals und/oder die Zusatzstromterminals derart zu steuern, dass ein Ladestrom eines Ladeterminals aus einem Stromstellerstrom oder mehreren Stromstellerströmen gebildet werden kann. Dabei kann der Ladestrom entweder aus Stromstellerströmen von einem oder mehreren Gleichstromstellern desselben Ladeterminals und zusätzlich oder alternativ aus Stromstellerströmen von einem oder mehreren Gleichstromstellern eines oder mehrerer anderer Ladeterminals gebildet werden. Eine solche Steuereinheit steuert besonders die Schaltmittel an und ggf. die Gleichstromsteller. Es kommt auch eine Koordination mit der Versorgungseinrichtung in Betracht, um bspw. einen Zugriff auf einen Speicher zu steuern oder einen Speicherinhalt zumindest zu berücksichtigen.

In einer besonderen Ausführungsform wird vorgeschlagen, dass wenigstens eine Steuereinheit eine dezentrale Steuereinheit ist, wobei jeweils eine dezentrale Steuereinheit in einem Ladeterminal und/oder in einem Zusatzstromterminal angeordnet ist. Dabei wird vorgeschlagen, dass die Steuereinheit mit wenigstens einer weiteren Steuereinheit kommuniziert, um das Erzeugen der Ladeströme koordiniert zu steuern. Die Verwendung dezentraler Steuereinheiten hat den Vorteil, dass diese auch auf einfache Art und Weise mit Eingabeeinheiten an jeder Ladestation gekoppelt werden können.

Außerdem wird in einer weiteren besonderen Ausführungsform vorgeschlagen, dass wenigstens eine Steuereinheit eine übergeordnete zentrale Steuereinheit ist, wobei die zentrale Steuereinheit dazu eingerichtet ist, die Ladeterminals und/oder die Zusatzstromterminals direkt zu steuern. Zusätzlich oder alternativ kann die zentrale Steuereinheit die Ladeterminals und/oder die Zusatzstromterminals indirekt über die in den Ladeterminals angeordneten dezentralen Steuereinheiten steuern, um das Erzeugen der Ladeströme zu koordinieren. Durch eine zentrale, übergeordnete Steuerung ist besonders eine übergreifende Koordination aller Ladeterminals gut realisierbar. Vorzugsweise ist vorgesehen, dass bei einem Ausfall der übergeordneten Steuerung jedes Ladeterminal wenigstens eine einfache Stellerleistung eines Gleichstromstellers als Fall-back-Option bereitstellen kann. Vorzugsweise ist vorgesehen, dass jedes Ladeterminal dazu vorbereitet ist, bei einem Ausfall der übergeordneten Steuerung eigenständig wenigstens einen Ladestrom aus einem, mehreren oder allen Stromstellerströmen des Ladeterminals zu erzeugen.

Die Ladestation ist so aufgebaut, dass diese insbesondere über eine bzw. die wenigstens eine Steuereinheit derart ansteuerbar ist, dass wenigstens ein Austauschschaltmittel eines Ladeterminals, an dem ein zu ladendes Elektrofahrzeug angeschlossen ist, geschlossen werden kann, um dadurch wenigstens einen Stromstellerstrom von wenigstens einem benachbarten Ladeterminal zu beziehen, und um damit einen Ladestrom für das zu ladende Elektrofahrzeug zu erzeugen.

In einer besonderen Ausführungsform ist die Ladestation zusätzlich oder alternativ so aufgebaut, dass wenigstens ein Brückenschaltmittel des Ladeterminals an dem das Elektrofahrzeug angeschlossen ist, geschlossen werden kann, um dadurch mehrere Stromstellerströme aus mehreren in dem Ladeterminal angeordneten Gleichstromstromstellern zum Erzeugen des Ladestroms zusammenzufügen.

Außerdem kann in einer weiteren besonderen Ausführungsform zusätzlich oder alternativ wenigstens ein Austauschschaltmittel wenigstens eines benachbarten oder weiteren Ladeterminals und/oder benachbarten oder weiteren Zusatzstromterminals von der Steuereinheit geschlossen werden kann, um dadurch, wenigstens einen Stromstellerstrom aus benachbarten oder weiteren Ladeterminals oder Zusatzstromterminals zum Erzeugen des Ladestroms zu beziehen und zusammenzuführen.

Außerdem wird vorgeschlagen, dass wenigstens ein Brückenschaltmittel wenigstens eines benachbarten oder weiteren Ladeterminals geschlossen werden kann, um wenigstens einen Stromstellerstrom aus mehreren in dem benachbarten Ladeterminal angeordneten Gleichstromstellern zum Erzeugen des Ladestroms über wenigstens eine Austauschleitung zu beziehen.

Damit sind verschiedene Möglichkeiten gegeben, die variable Verteilung oder Zuordnung von Stromstellerströmen zu erreichen. Das wird besonders durch das Schalten der Schaltmittel erreicht. Besonders bevorzugt werden all die beschriebenen Schalthandlungen in einem Gesamtkonzept koordiniert. Das koordiniert besonders das Schalten der drei Schalterarten, nämlich das Austauschschaltmittel, das Ladeschaltmittel und das Brückenschaltmittel.

Auch ist die Steuereinheit insbesondere dazu eingerichtet, die innerhalb eines Ladeterminals angeordneten steuerbaren Schaltmittel über ein Steuersignal zu steuern. Dazu kann die Steuereinheit die Schaltmittel über eine übliche Steuerverbindung wie eine direkt über eine übliche Steuerverbindung oder ein sonstiges Kommunikationssystem ansteuern.

Erfindungsgemäß wird vorgeschlagen, dass wenigstens ein Austauschschaltmittel und wenigstens ein Brückenschaltmittel so verschaltet sind, dass ein Stromstellerstrom eines Gleichstromstellers eines ersten Ladeterminals oder eines ersten Zusatzstromterminals über eine erste Längsleitung und dass wenigstens eine Austauschschaltmittel in ein zweites Ladeterminal fließen kann. Zudem kann der Stromstellerstrom in dem zweiten Ladeterminal über einen ersten Verbindungsknoten und eine erste Querleitung zu einer zweiten Längsleitung fließen. Darüber hinaus kann auch der Stromstellerstrom über einen zweiten Verbindungsknoten, das wenigstens eine Brückenschaltmittel und einen dritten Verbindungsknoten zu einer zweiten Querleitung des zweiten Ladeterminals fließen.

Diese besondere Verschaltungsvarianten ermöglichen es somit, das Austauschschaltmittel und das wenigstens eine Brückenschaltmittel so verschalten sind, dass wenigstens ein weiterer Stromstellerstrom zum Erzeugen eines Ladestroms zusammengeführt werden kann, insbesondere um ein an die zweite Querleitung angeschlossenes Elektrofahrzeug zu laden.

Vorzugsweise ist die Ladestation so aufgebaut, dass diese insbesondere über eine bzw. die wenigstens eine Steuereinheit derart angesteuert werden kann, dass die steuerbaren Schaltmittel so geschaltet werden können, dass sich ein Ladestrom aus wenigstens 3 Stromstellerströmen, vorzugsweise wenigstens 5 Stromstellerströmen, insbesondere wenigstens 7 Stromstellerströmen zusammensetzt bzw. aus diesen gebildet werden kann.

Ein besonderer Vorteil einen Ladestrom aus mehreren Stromstellerströmen zu erzeugen ist, dass keine oder weniger groß dimensionierte Gleichstromsteller verwendet zu werden brauchen, um einen Strombedarf zu decken, der ggf. größer ist, als ein üblicher Gleichstromsteller erzeugen kann. Beispielsweise könnte so ein Elektrofahrzeug, das einen Ladestrom von 400 A benötigt, durch vier Stromstellerströme zu je 100 A aufgeladen werden, anstatt einen groß dimensionierten Stromsteller mit 400 A nutzen zu müssen. Zudem kann die Anzahl der verwendeten Stromstellerströme schnell wieder von vier auf drei reduziert werden, um bei diesem Beispiel zu bleiben, wenn der Bedarf des hohen Ladestroms wieder gesunken ist. Der freiwerdende Gleichstromsteller kann dann einen Stromstellerstrom für einen anderen Ladevorgang bereitstellen.

In einer weiteren Ausführungsform wird vorgeschlagen, dass die Steuereinheit das Erzeugen der Ladeströme, insbesondere die Anzahl der an einem Ladeanschluss bereitgestellten Stromstellerströme, abhängig eines Steuerkriteriums steuern kann. Dabei können die Steuerkriterien unterschiedlich sein, und es werden besonders die folgenden vorgeschlagen:
- ein Typ eines an den Ladeanschluss angeschlossen Elektrofahrzeugs;
- ein Speicherzustand des an den Ladeanschluss angeschlossen Elektrofahrzeugs;
- ein speicherzustandsabhängiger Strombedarf des angeschlossenen Elektrofahrzeugs;
- eine Stromanforderung des angeschlossenen Elektrofahrzeugs;
- ein von einem Benutzer angegebener Ladewunsch zum Laden des an den Ladeanschluss angeschlossen Elektrofahrzeugs;
- eine Anzahl verfügbarer Gleichstromsteller zum Erzeugen von Stromstellerströmen zum Zusammenfügen zum Erzeugung eines Ladestroms.

Ein wesentlicher Vorteil gegenüber konventionellen Ladestationen ist somit, dass ungenutzte Stromstellerströme bzw. Stromstellerströme temporär ungenutzter Gleichstromsteller, in Abhängigkeit der genannten Steuerkriterien anderen Elektrofahrzeugen an benachbarten Ladeterminals bereitgestellt werden können. Zudem können ebenso ungenutzte Gleichstromstromsteller einfach weitergeschaltet werden, wenn Fahrzeuge länger an einem Ladeterminal stehen und bereits vollständig geladen sind.

Ferner wird erfindungsgemäß ein Verfahren zum Laden mehrerer Elektrofahrzeuge, insbesondere Elektroautomobile, mittels einer Ladestation vorgeschlagen und das Verfahren umfasst die Schritte:
- Versorgen der Ladestation mit elektrischer Leistung über eine Versorgungseinrichtung der Ladestation;
- Laden jeweils wenigstens eines Elektrofahrzeugs mittels eines von mehreren Ladeterminals der Ladestation mit den Schritten
- Beziehen elektrischer Leistung von der Versorgungseinrichtung an einem Versorgungseingang des Ladeterminals,
- Abgeben jeweils eines Ladestromes zum Laden des angeschlossenen Elektrofahrzeugs an einen Ladeausgang mit mehreren Ladeanschlüssen, wobei das Elektrofahrzeug an einem der Ladeanschlüsse angeschlossen ist, an den der Ladestrom abgegeben wird, und wobei
- mehrere zwischen dem Versorgungseingang und dem Ladeausgang angeordnete Gleichstromsteller aus elektrischer Leistung der Versorgungseinrichtung jeweils einen Stromstellerstrom erzeugt, und
- der Ladestrom aus einem Stromstellerstrom oder mehreren Stromstellerströmen gebildet wird, und wobei
- die Ladeterminals untereinander an Austauschanschlüssen über elektrische Austauschleitungen verbunden sind, und wahlweise
- darüber Stromstellerströme untereinander austauschen.

Es wird somit ein Verfahren vorgeschlagen, dass in vorteilhafter Weise eine Ladestation gemäß wenigstens einer vorstehenden beschriebenen Ausführungsform zum Laden wenigstens eines Elektrofahrzeugs verwendet. Das Verfahren kann die zu der Ladestation genannten Vorteil und Eigenschaften somit umsetzten und oder ausnutzen.

Es wird somit auch vorgeschlagen, dass das Verfahren eine Ladestation gemäß einer vorstehend genannten Ausführungsform verwendet.

Eine weitere Ausführungsform schlägt vor, dass
- wenigstens ein Austauschschaltmittel eines Ladeterminals, an dem ein zu ladendes Elektrofahrzeug angeschlossen ist, geschlossen wird, und dadurch wenigstens ein Stromstellerstrom von wenigstens einem benachbarten Ladeterminal bezogen wird, und damit einen Ladestrom für das zu ladende Elektrofahrzeug erzeugt wird und/oder
- wenigstens ein Brückenschaltmittel des Ladeterminals an dem das Elektrofahrzeug angeschlossen ist, geschlossen ist, und dadurch mehrere Stromstellerströme aus mehreren in dem Ladeterminal angeordneten Gleichstromstromstellern zum Erzeugen des Ladestroms zusammengefügt bzw. überlagert werden, und/oder
- wenigstens ein Austauschschaltmittel wenigstens eines benachbarten oder weiteren Ladeterminals und/oder benachbarten oder weiteren Zusatzstromterminals geschlossen ist, und dadurch, wenigstens ein Stromstellerstrom aus benachbarten oder weiteren Ladeterminals oder Zusatzstromterminals zum Erzeugen des Ladestroms bezogen und zusammengeführt bzw. überlagert wird und/oder
- wenigstens ein Brückenschaltmittel wenigstens eines benachbarten oder weiteren Ladeterminals geschlossen ist, und dadurch wenigstens ein Stromstellerstrom aus mehreren in dem benachbarten Ladeterminal angeordneten Gleichstromstellern zum Erzeugen des Ladestroms über wenigstens eine Austauschleitung bezogen wird.

Auch mit diesen Verfahrensschritten können die vorstehend zur Ladestation erläuterten Vorzüge und Eigenschaften erreicht oder ausgenutzt werden. Besonders vorteilhaft werden die vier vorstehend beschriebenen Merkmale zusammen kombiniert verwendet, um dadurch in vorteilhafter Weise Ladeströme aus mehreren Stromstellerströmen zusammenzusetzen.

Die vorliegende Erfindung wird nun nachfolgend exemplarisch anhand von Ausführungsbeispielen unter Bezugnahme auf die begleitenden Figuren näher erläutert.
- Figur 1: zeigt eine Ausführungsform einer Ladestation.
- Figur 2: zeigt eine detailliertere Ausführungsform eines Ladeterminals, eines Zusatzstromterminals sowie eines Versorgungsterminals.
- Figur 3: zeigt ein Diagramm mit drei unterschiedlichen Ladestromverläufen für jeweils drei verschiedene Fahrzeugklassen.

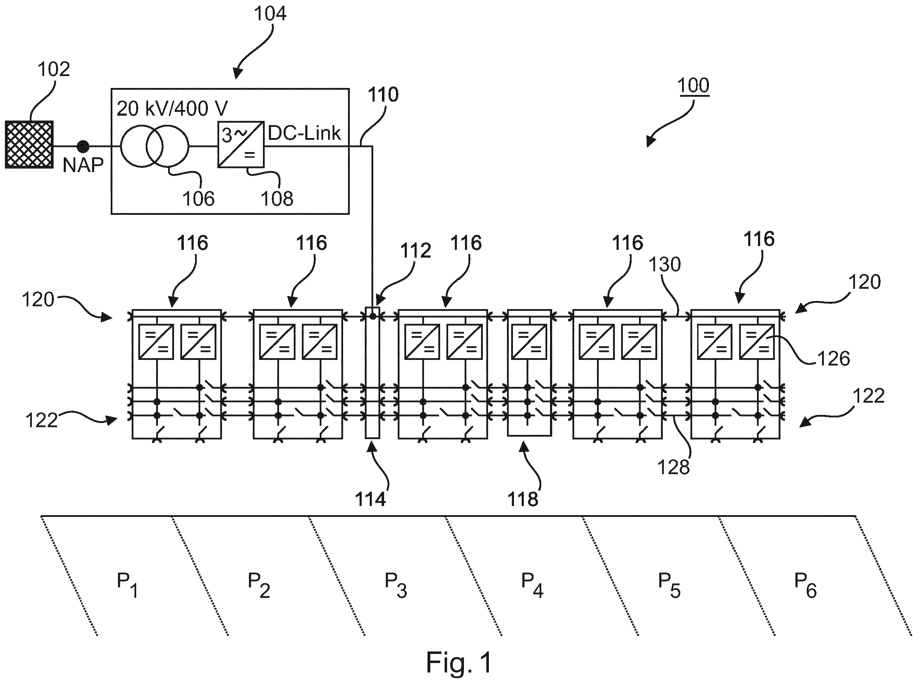

Die Figur 1 zeigt eine Ladestation 100, die über einen Netzanschlusspunkt NAP mit einem elektrischen Versorgungsnetz 102 verbunden ist. Um eine Leistung zum Laden der Elektrofahrzeuge aus dem Versorgungsnetz 102 beziehen zu können, ist eine Versorgungseinrichtung 104 vorgesehen. Die Versorgungseinrichtung 104 umfasst dabei wenigstens einen Transformator 106 und eine dem Transformator nachgeschaltete Gleichrichtereinheit 108. Der Transformator 106 ist dabei direkt über den Netzanschlusspunkt NAP mit dem Versorgungsnetz 102 verbunden und transformiert dabei eine erste Wechselspannung, insbesondere die Netzspannung, in eine für die Gleichrichtereinheit 108 geeignete zweite Wechselspannung. Als konkretes Beispiel ist in der Figur 1 hierzu ein Mittelspannungstransformator dargestellt, der die Netzspannung von 20 kV in eine 400-V-Wechselspannung heruntertransformiert. Die gezeigte Gleichrichtereinheit 108 erzeugt dabei aus der zweiten Wechselspannung eine Gleichspannung an einem Gleichspannungsausgang und kann somit eine Leistung bereitstellen, die aus dem Versorgungsnetz bezogen wird. Somit ist die Versorgungseinrichtung 104 insbesondere zum Anschließen an ein elektrisches Versorgungsnetz 102 sowie zum Versorgen der Ladestation mit elektrischer Leistung vorgesehen.

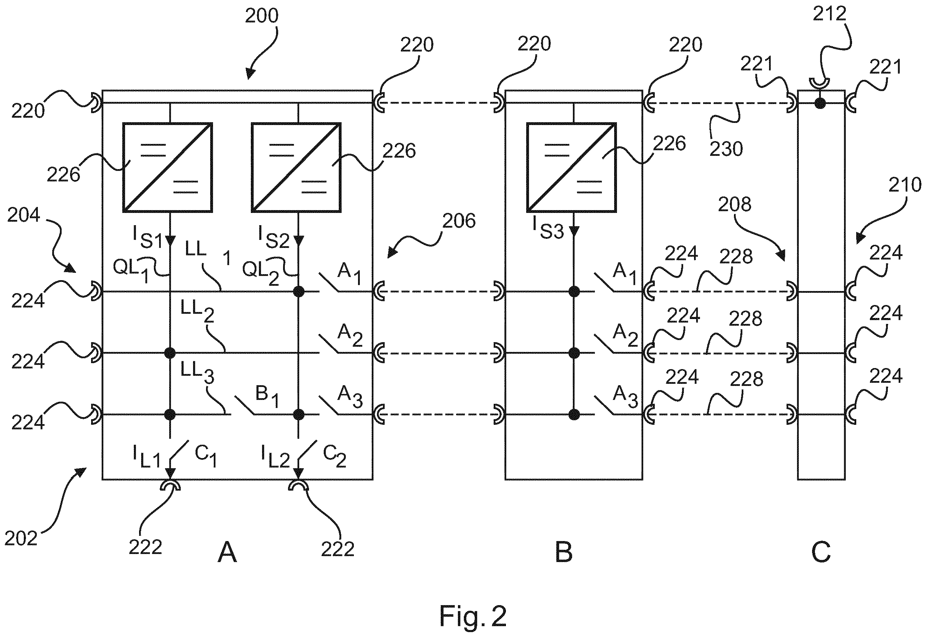

Die in der Figur 1 gezeigte Ladestation 100 umfasst weiterhin fünf Ladeterminals 116, ein Versorgungsterminal 114 sowie ein Zusatzstromterminal 118, die auch vereinfachend als Terminals bezeichnet werden können. Eine detaillierte Beschreibung der genannten Terminals folgt in der Beschreibung zur Figur 2.

In einem konkreten Beispiel sind die Terminals (114, 116, 118) der Ladestation 100 nebeneinander an den Parkplätzen P1 bis P6 angeordnet. So können mehrere Elektrofahrzeuge geladen werden, die auf den Parkplätzen P1 - P6 zum Laden abgestellt werden. Die Parkplätze sind besonders veranschaulichend zu verstehen und soll nicht die Anzahl der zu ladenden Fahrzeuge auf sechs beschränken, vielmehr können grundsätzlich auch 10 Fahrzeuge an der gezeigten Ladestation geladen werden.

Dabei ist ein Versorgungsterminal 114 vorgesehen, um die von der Versorgungseinrichtung 104 bereitgestellte Leistung in Form einer Gleichspannung an die Terminals weiterzugeben. Dazu ist das Versorgungsterminal über eine Hauptversorgungsleitung 110 mit der Gleichrichtereinheit 108 elektrisch verbunden. Um die elektrische Verbindung mit der Hauptversorgungsleitung 110 herzustellen, ist ein Hauptversorgungseingang 112 an dem Versorgungsterminal 114 angebracht. Über den Hauptversorgungseingang 112 kann somit eine Leistung von der Versorgungseinrichtung 104 bezogen werden. Die so bezogene Leistung wird dann über mehrere Versorgungsleitungen 130 an die anderen Terminals (116, 118) verteilt. Das Versorgungsterminal 114 ist also zum Empfangen elektrischer Leistung von der Versorgungseinrichtung und zum Weiterleiten an die Ladeterminals 116 und ggf. Zusatzstromterminals 118.

Neben dem Versorgungsterminal weist die Ladestation 100 mehrere Ladeterminals 116 zum Laden jeweils wenigstens eines Elektrofahrzeugs auf.

Jedes Ladeterminal umfasst dabei einen Versorgungseingang 120 und einen Ladeausgang 122. Der Versorgungseingang 120 ist dabei zum Beziehen elektrischer Leistung von der Versorgungseinrichtung 104 eingerichtet, indem Anschlüsse am Versorgungseingang 120 vorgesehen sind, mit denen die Terminals untereinander an den Versorgungseingängen verbunden werden können. Die Figur 1 zeigt hierbei, dass beispielsweise zwei Ladeterminals 116 linksseitig und drei Ladeterminals sowie das Zusatzstromterminal 118 rechtsseitig, bezogen auf das Versorgungsterminal 114, angeordnet sind. Alle Terminals sind dabei an den jeweiligen Versorgungseingängen 120 über Versorgungsleitungen 130 miteinander elektrisch gekoppelt. In dem gezeigten Beispiel ist somit zwischen zwei benachbarten Terminals jeweils ein Abschnitt der Versorgungsleitung 130 vorhanden, sodass keine einzelne, durchgängige lange Versorgungsleitung vorliegt, wie es bei einer Stromsammelschiene oder einer Busleitung üblich ist. Über die Versorgungsleitungen 130 können die Ladeterminals die von dem Versorgungsterminal 114 weitergeleitete elektrische Leistung direkt beziehen. Je nach Anordnung der Terminals in der Ladestation können die Ladeterminals 116 und Zusatzstromterminals 118 jedoch auch indirekt die weitergeleitete Leistung des Versorgungsterminals 114 über ein anderes Terminal beziehen. In diesem Fall können die Versorgungseingänge dann auch als Versorgungsausgänge für ein benachbartes Terminal angesehen werden.

Neben dem Versorgungseingang 120 ist zudem an jedem Ladeterminal 116 ein Ladeausgang 122 mehreren Ladeanschlüssen vorgesehen, die zum Abgeben jeweils eines Ladestromes zum Laden jeweils eines angeschlossenen Elektrofahrzeugs genutzt werden. In der Figur 2 können zum Beispiel zwei Elektrofahrzeuge an die zwei Ladeausgänge jeweils einer der fünf Ladeterminals 116 angeschlossen werden.

Zwischen dem Versorgungseingang 120 und dem Ladeausgang 122 ist in jedem der Ladeterminals 116 dabei mehrere Gleichstromsteller 126 angeordnet, um jeweils einen Stromstellerstrom pro Stromsteller bzw. DC-DC-Wandler zu erzeugen. Die so erzeugten Ströme werden dann verwendet, um ein an einem Ladeausgang 122 eines der Ladeterminals angeschlossenes Elektrofahrzeug zu laden.

Als weiteres Terminal ist ein Zusatzstromterminal in der Ladestation vorgesehen. Dieses Zusatzstromterminal dient dazu, einen zusätzlichen Strom zum Laden der Elektrofahrzeuge zu erzeugen und bereitzustellen. Es weist dabei keine Ladeanschlüsse an einem Ladeausgang zum Laden eines Elektrofahrzeuges auf. Ein zusätzlicher Strom wird beispielsweise dann bereitgestellt, wenn ein Ladeterminal zu stark ausgelastet ist. Dabei kann eine zu starke Auslastung zum Beispiel eintreten, wenn ein Strombedarf eines Elektroautos den maximalen Strom überschreitet, den ein Terminal erzeugen kann. In einem konkreten Beispiel, wenn ein Fahrzeug einen Ladestrom von 400 A benötigt und das Ladeterminal jedoch nur maximal 100 A bereitstellen kann. Somit ist das Zusatzstromterminal zum Erzeugen eines oder mehrerer zusätzlicher Zusatzströme, insbesondere Stromstellerströme vorgesehen, um diese wenigstens einem Ladeterminal bereitzustellen, wobei das Zusatzstromterminal selbst keinen Ladeausgang aufweist.

Besonderes an der in der Figur 1 gezeigten Ladestation 100 ist zu erkennen, dass die Ladeausgänge 122 der Ladeterminals untereinander an Austauschanschlüssen über elektrische Austauschleitungen 128 verbunden sind, um darüber die erzeugten Stromstellerströme untereinander auszutauschen zu können. Ebenso ist es vorgesehen, dass auch das Versorgungsterminal 114 und das Zusatzstromterminal 118 ausgangsseitig mit den Ladeterminals 116 über die Austauschleitungen 128 elektrisch gekoppelt sind. So kann beispielsweise ein auf dem Parkplatz P1 parkendes Elektrofahrzeug einen Ladestrom beziehen, der wenigstens teilweise von einem Gleichstromsteller aus einem anderen Ladeterminal oder einem Zusatzstromterminal erzeugt wurde.

Die Figur 2 zeigt eine detailliertere Ausführungsform eines Ladeterminals A, eines Zusatzstromterminals B sowie eines Versorgungsterminals C die den Ladeterminals 116, dem Zusatzstromterminal 118 bzw. dem Versorgungsterminal 114 der Figur 1 entsprechen.

Das Ladeterminal A weist dabei einen Versorgungseingang 200 sowie einen Ladeausgang 202 auf. Am Versorgungseingang 200 sind dabei zwei Anschlussmittel 220 angeordnet, die zum Beispiel als Steckverbinder ausgebildet sein können. An diese Anschlussmittel kann somit ein beliebiges weiteres Ladeterminal, ein Zusatzstromterminal oder ein Versorgungsterminal angeschlossen werden, um die Versorgungeingänge dieser Terminals miteinander zu verbinden.

Dabei weist jedes Ladeterminal A zwei Gleichstromsteller 226 auf, die zwischen dem Versorgungseingang 200 und dem Ladeausgang 202 zueinander parallel angeordnet sind, und jeweils einen Stromstellerstrom I_{S1} bzw. I_{S2} in jeweils eine am Ladeausgang angeordnete Querleitung QL₁ und QL₂ einprägen. Dabei ist jedem Gleichstromsteller 226 genau ein Ladeanschluss 222 und für jeden Gleichstromsteller eine Querleitung QL₁ bzw. QL₂ zugeordnet. Somit werden bei n Gleichstromstellern n Querleitungen verwendet, um den Gleichstromstellers mit dem Ladeanschluss zu verbinden, um den Stromstellerstrom an den zugeordneten Ladeanschluss zu übertragen. Mit zwei im Ladeterminal A vorhandenen Gleichstromstellern ergibt sich somit ein Aufbau des Terminals, aus zwei Querleitungen QL₁, QL₂ und zwei Ladeanschlüssen 222.

Zusätzlich sind für das Ladeterminal A ein erster und ein zweiter Verbindungsbereich mit den Pfeilen 204 und 206 angedeutet, die jeweils mehrere, insbesondere gleich viele, Austauschanschlüsse 224 aufweist. An diesen Austauschanschlüssen können die Terminals über im Wesentlichen parallele Austauschleitungen 228 verbunden werden, die in der Figur 2 gestrichelt dargestellt sind.

Für jeden Austauschanschluss einer der Verbindungsbereiche ist darüber hinaus eine Längsleitung LL₁, LL₂, LL₃ innerhalb des Terminals vorgesehen, um den jeweiligen Austauschanschluss 224 des einen Verbindungsbereiches 204, 206 mit jeweils einem Austauschanschluss des anderen Verbindungsbereiches 206, 204 elektrisch zu verbinden, sodass bei m Austauschanschlüssen des einen Verbindungsbereiches m Längsleitungen vorgesehen sind. Die Längsleitungen verlaufen dabei insbesondere elektrisch zueinander parallel. Hierzu weist die konkrete Ausgestaltung des Ladeterminals A zum Beispiel im Verbindungsbereich 206 drei Austauschanschlüsse auf, womit drei Längsleitungen vorgesehen werden. Die Längsleitungen LL₁, LL₂ und LL₃ verbinden dabei die beiden Verbindungsbereiche 204 und 206.

Damit ein dynamischer Austausch der erzeugten Gleichstromstellerströme möglich ist, ist jede Längsleitung LL₁, LL₂, LL₃ jeweils über einen Verbindungsknoten mit wenigstens einer der Querleitung QL₁, QL₂ direkt verbunden.

Damit zudem die Ladeströme I_{L1} oder I_{L2} an einem der Ladeausgänge 222 beliebig erzeugt werden können, sind im Ladeterminal mehrere steuerbare Schaltmittel vorhanden, die von einer Steuereinheit angesteuert werden können. Dabei kann entweder jedes Ladeterminal selber eine Steuereinheit aufweisen oder eine übergeordnete Steuereinheit die Ansteuerung der steuerbaren Schaltmittel übernehmen. Ebenso ist eine Mischform aus Steuereinheiten in jedem Ladeterminal und einer übergeordneten Steuereinheit implementierbar. Dies ist jedoch nicht in der Figur 2 dargestellt.

Als steuerbare Schaltmittel sind dabei im Ladeterminal A in der Figur 2 die drei Austauschschaltmittel A1, A2 und A3 dargestellt, die mit jeweils einem Austauschanschluss 224 elektrisch verbunden sind, um den Austausch wenigstens eines Stromstellerstroms über das Austauschmittel mit einem benachbarten Ladeterminal oder Zusatzstromterminal zu steuern. Ein weiteres steuerbares Schaltmittel ist das Brückenschaltmittel B1, das zwei Gleichstromsteller in einem Ladeterminal elektrisch miteinander verbindet, vorliegend über die zwei Querleitungen QL1 und QL₂, um eine Überlagerung der Stromstellerströme I_{S1} und I_{S2} der beiden Gleichstromsteller 226 zu steuern. Ebenso ist jeweils ein Ladeschaltmittel C1 oder C2 an einem Ladeanschluss 222 angeordnet, um entweder das Abgeben des Ladestroms I_{L1} oder I_{L2} zu steuern.

Demnach kann das in der Figur 2 dargestellte Ladeterminal A einen Ladestrom I_{L1} oder I_{L2} aus einem Stromstellerstrom I_{S1} bzw. I_{S2} oder mehreren Stromstellerströmen bilden und sogar weitere Stromstellerströme über die Austauschanschlüsse beziehen oder abgegeben.

Im Vergleich zum Ladeterminal A ist im Zusatzstromterminal B dabei der Gleichstromsteller 226 mit allen Austauschanschlüssen 224 verbunden, um den Stromstellerstrom I_{S3} an allen Austauschleitungen 228 bereitzustellen. Das Zusatzstromterminal ist somit dazu vorbereitet einen zusätzlichen Strom abgeben. Damit jedoch auch Stromstellerströme gesteuert abgegebenen werden können, sind ähnlich zum Ladeterminal A drei Austauschschaltmittel A1, A2 und A3 im Zusatzstromterminal vorgesehen. Diese können auch zum Weiterleiten von Stromstellerströmen benachbarter Terminals eingesetzt werden, wenn zum Beispiel der Stromsteller 226 im Zusatzstromterminal keinen Strom I_{S3} erzeugt.

Das Versorgungsterminal C weist im Vergleich zu den Terminals A und B einen zusätzlichen Hauptversorgungseingang 212 auf sowie jeweils zwei Versorgungsausgänge 221 die baugleich zu den Versorgungseingängen der Terminals A und B sind. Die Versorgungsausgänge 221 werden dabei genutzt, um darüber die von der Versorgungseinrichtung bezogene Leistung an die Ladeterminals und ggf. das wenigstens eine Zusatzstromterminal weiterzuleiten, insbesondere um Leistung an alle Ladeterminals weiterzuleiten.

Zudem weist das Versorgungsterminal C ähnlich zu den Terminals A und B ebenfalls Austauschanschlüsse 224 auf, um an wenigstens einem Verbindungsbereich 208 oder 210 mit jeweils einem benachbarten Ladeterminal und/oder ggf. Zusatzstromterminal verbunden zu werden, um wenigstens einen Stromstellerstrom durch das Versorgungsterminal hindurchleiten zu können.

Die Versorgungseingänge/-ausgänge und Austauschanschlüsse der Terminals A, B und C sind dabei im Wesentlichen baugleich. So kann eine Ladestation beliebig, wie eine Art Setzkasten, aus den Terminals A, B und/oder C modular aufgebaut werden.

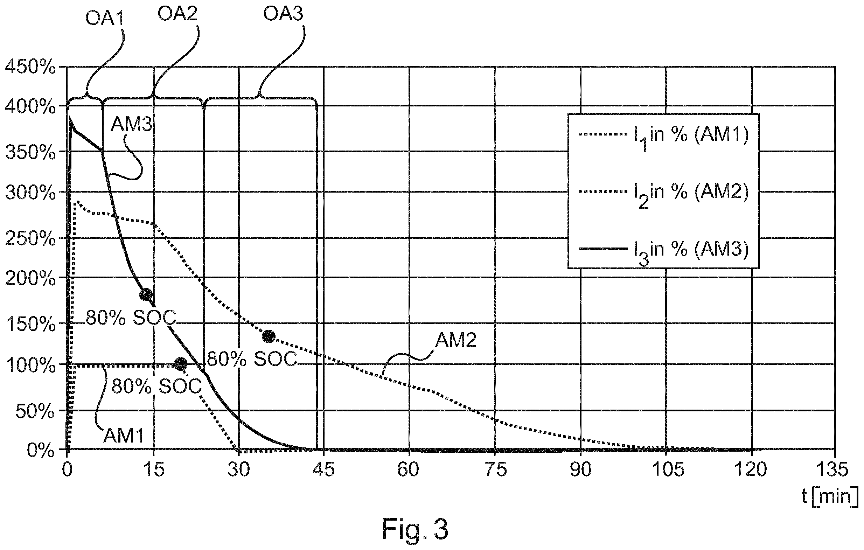

Die Figur 3 zeigt ein Diagramm mit drei unterschiedlichen Ladestromverläufen I₁, I₂ und I₃ in Prozent für jeweils drei verschiedene Fahrzeugklassen AM1, AM2 und AM3. Auf der Ordinate ist dabei die Auslastung der Ladestation in Prozent dargestellt, wobei das Ladeterminal in diesem Beispiel bei 100%-Auslastung einen Ladestrom von 100 A abgeben kann, was dem maximalen Strom der Fahrzeugklasse AM1 entspricht. Auf der Abszisse ist die Zeit t in Minuten dargestellt.

Dabei ist der Verlauf der drei Stromkennlinien I₁, I₂ und I₃ sehr unterschiedlich, wobei jede der drei Kennlinien einer Stromkennlinie einer unterschiedlichen Fahrzeugklasse AM1, AM2 oder AM3 entspricht. Zu der Fahrzeugklasse AM3 ist zu beachten, dass diese eine etwa doppelt so hohe Ladespannung benötigt, wie die Fahrzeugklassen AM1 und AM2. Die 400% Ladestrom, die in Figur 3 anfangs für den Fahrzeugtyp AM3 eingezeichnet sind, entsprechen somit, bezogen auf die Fahrzeugklasse AM1, etwa 800% Ladeleistung. Ebenso werden 80%-SOC-Punkte des Ladezustands (engl. "State of Charge"), die einen Ladezustand von 80% bezogen auf eine vollständige Ladung angeben, zu sehr unterschiedlichen Zeitpunkten erreicht. Der Fahrzeugklasse AM1 könnte beispielsweise einer Kleinwagenklasse entsprechen, die Autoklasse AM2 einer Premiumklasse und die Klasse AM3 einer Supersportwagenklasse entsprechen. Je nach Autoklasse oder Fahrzeugtyp nehmen die Ladekennlinien bzw. Stromkennlinien I₁, I₂ und I₃ einen anderen Verlauf ein. Zwei Stromsteller können parallel (doppelter Strom) oder in Reihe (doppelte Spannung) arbeiten.

Für die Autoklasse AM1 wird beispielsweise ein relativ konstanter Ladestrom von 100 A für etwa 20 Minuten benötigt, sodass ein Ladeterminal mit einem Gleichstromsteller zu 100% ausgelastet ist. Hier wurde also ein Stromsteller bereits ausreichen, der 100A liefern kann. Bei einem Premiumfahrzeug oder einem Sportwagen hingegen könnte ein Ladeterminal alleine nicht den benötigten Ladestrom bereitstellen, um die Fahrzeugtypen aufzuladen. Damit die Gleichstromsteller nicht auf einen Ladestrom von beispielsweise 400 A für den Supersportwagen dimensioniert werden müssen, kann das vorgeschlagene Ladeterminal Gleichstromstellerströme über benachbarte Terminals beziehen, um auch einen Supersportwagen im ersten Ladebereich AO1 laden zu können. Im Ladebereich AO2 fällt der Strombedarf des Supersportwagens dann relativ schnell ab. Nicht benötigte Gleichstromsteller können dann wiederum in Abhängigkeit des Strombedarfs des Fahrzeugs - werden diese nicht mehr benötigt - durch die Steuereinheit freigeben bzw. aboder umgeschaltet werden.

Bezogen auf das konkrete Beispiel des Supersportwagens, könnte die Ladestation demnach den Supersportwagen in den ersten knapp 7 Minuten bis 300 % Auslastung mit sieben oder acht Gleichstromstellern gleichzeitig zu je etwa 50 A aufladen. Diese große Anzahl ist nötig, weil der beispielhaft genannte Supersportwagen eine doppelt so hohe Ladespannung benötigt, so dass statt etwa 100A nur etwa 50A je Gleichstromsteller geliefert werden können. Zwischen 300 % und 200 % wären dann nur noch sechs oder fünf Gleichstromsteller nötig, ab 200 % wären nur noch vier oder drei Gleichstromsteller nötig und nach 22.5 Minuten sind dann im Arbeitsbereich AO3 nur noch zwei oder ein Gleichstromsteller nötig, um den Sportwagen vollständig aufzuladen.

## Patentansprüche

1. Ladestation (100) zum Laden mehrerer Elektrofahrzeuge, insbesondere Elektroautomobile, umfassend:
- eine Versorgungseinrichtung (104), insbesondere zum Anschließen an ein elektrisches Versorgungsnetz (102), zum Versorgen der Ladestation mit elektrischer Leistung
- mehrere Ladeterminals (116) zum Laden jeweils wenigstens eines Elektrofahrzeugs, und jedes Ladeterminal umfasst
- einen Versorgungseingang (120) zum Beziehen elektrischer Leistung von der Versorgungseinrichtung,
- einen Ladeausgang (122) mit mehreren Ladeanschlüssen zum Abgeben jeweils eines Ladestromes zum Laden jeweils eines angeschlossenen Elektrofahrzeugs, und
- mehreren zwischen dem Versorgungseingang und dem Ladeausgang angeordneten Gleichstromstellern (126) um aus der elektrischen Leistung der Versorgungseinrichtung jeweils einen Stromstellerstrom zu erzeugen, wobei
- jeder Ladestrom (l_{L1}, L₂) aus einem Stromstellerstrom oder mehreren Stromstellerströmen (I_{S1}, I_{S2}, I_{S3}) gebildet wird, und wobei
- die Ladeterminals untereinander an Austauschanschlüssen über elektrische Austauschleitungen (128) verbunden sind, um darüber Stromstellerströme untereinander auszutauschen, **dadurch gekennzeichnet, dass**
- jedes Ladeterminal einen ersten und einen zweiten Verbindungsbereich (204, 206) mit jeweils mehreren Austauschanschlüssen (224) aufweist,
-- für jeden Austauschanschluss einer der Verbindungsbereiche eine Längsleitung (LL1, LL2, LL3) vorgesehen ist, um den jeweiligen Austauschanschluss des einen Verbindungsbereiches (204) mit jeweils einem Austauschanschluss des anderen Verbindungsbereiches (206) elektrisch zu verbinden, so dass bei m Austauschanschlüssen des einen Verbindungsbereiches m Längsleitungen vorgesehen sind, die insbesondere elektrisch zueinander parallel verlaufen,
- jedem Gleichstromsteller (226) ein Ladeanschluss (222) zugeordnet ist und für jeden Gleichstromsteller eine Querleitung (QL1, QL2) vorgesehen ist, um den Gleichstromsteller mit dem Ladeanschluss zu verbinden, um den Stromstellerstrom an den zugeordneten Ladeanschluss zu übertragen, so dass bei n Gleichstromstellern n Querleitungen vorgesehen sind,
wobei
- jede Längsleitung über einen Verbindungsknoten mit wenigstens einer der Querleitungen direkt verbunden ist,
**dadurch gekennzeichnet, dass**
- jedes Ladeterminal wenigstens ein steuerbares Schaltmittel aufweist aus der Liste aufweisend
- ein Austauschschaltmittel (A1, A2, A3), das mit jeweils einem Austauschanschluss elektrisch verbunden ist, um den Austausch wenigstens eines Stromstellerstroms über das Austauschmittel mit einem benachbarten Ladeterminal oder Zusatzstromterminal zu steuern,
- ein Ladeschaltmittel (C1, C2), das mit jeweils einem Ladeanschluss elektrisch verbunden ist, um das Abgeben eines Ladestroms an den Ladeanschluss zu steuern, und
- ein Brückenschaltmittel (B1), das mit zwei Gleichstromstellern in einem Ladeterminal elektrisch verbunden ist, insbesondere über zwei Querleitungen, um eine Überlagerung der Stromstellerströme der beiden Gleichstromsteller zu steuern, und dass
- die Ladestation (100) so aufgebaut ist, dass
- wenigstens ein Austauschschaltmittel eines Ladeterminals, an dem ein zu ladendes Elektrofahrzeug angeschlossen ist, geschlossen werden kann, um dadurch wenigstens einen Stromstellerstrom von wenigstens einem benachbarten Ladeterminal zu beziehen, um damit einen Ladestrom für das zu ladende Elektrofahrzeug zu erzeugen und/oder
- wenigstens ein Brückenschaltmittel des Ladeterminals an dem das Elektrofahrzeug angeschlossen ist, geschlossen werden kann, um dadurch mehrere Stromstellerströme aus mehreren in dem Ladeterminal angeordneten Gleichstromstromstellern zum Erzeugen des Ladestroms zusammen zu fügen, und/oder
- wenigstens ein Austauschschaltmittel wenigstens eines benachbarten oder weiteren Ladeterminals und/oder benachbarten oder weiteren Zusatzstromterminals geschlossen werden kann, um dadurch, wenigstens einen Stromstellerstrom aus benachbarten oder weiteren Ladeterminals oder Zusatzstromterminals zum Erzeugen des Ladestroms zu beziehen und zusammenzuführen und/oder
- wenigstens ein Brückenschaltmittel wenigstens eines benachbarten oder weiteren Ladeterminals geschlossen werden kann, um wenigstens einen Stromstellerstrom aus mehreren in dem benachbarten Ladeterminal angeordneten Gleichstromstellern zum Erzeugen des Ladestroms über wenigstens eine Austauschleitung zu beziehen.
**dadurch gekennzeichnet, dass**
- wenigstens ein Austauschschaltmittel und wenigstens ein Brückenschaltmittel so verschaltbar sind, dass
- ein Stromstellerstrom eines Gleichstromstellers eines ersten Ladeterminals oder des bzw. eines ersten Zusatzstromterminals über eine erste Längsleitung und das wenigstens eine Austauschschaltmittel in ein zweites Ladeterminal fließen kann,
- der Stromstellerstrom in dem zweiten Ladeterminal über einen ersten Verbindungsknoten und eine erste Querleitung zu einer zweiten Längsleitung fließen kann und
- der Stromstellerstrom über einen zweiten Verbindungsknoten, das wenigstens eine Brückenschaltmittel und einen dritten Verbindungsknoten zu einer zweiten Querleitung des zweiten Ladeterminals fließen kann,
- um dort mit wenigstens einem weiteren Stromstellerstrom zum Erzeugen eines Ladestroms zusammengeführt zu werden, insbesondere
- um ein an die zweite Querleitung angeschlossenes Elektrofahrzeug zu laden.

2. Ladestation nach Anspruch 1,
**dadurch gekennzeichnet, dass**
die Ladestation (100) wenigstens ein Zusatzstromterminal (118) aufweist, zum Erzeugen eines oder mehrerer zusätzlicher Stromstellerströme, um diese wenigstens einem Ladeterminal bereitzustellen, wobei das Zusatzstromterminal selbst keinen Ladeausgang aufweist, und jedes Zusatzstromterminal umfasst
- einen dem Versorgungseingang eines Ladeterminals entsprechenden Versorgungseingang zum Beziehen elektrischer Leistung von der Versorgungseinrichtung,
- wenigstens einen dem Austauschanschluss eines Ladeterminals entsprechenden Austauschanschluss zum Übertragen von Stromstellerströmen an wenigstens eines der Ladeterminals, und
- wenigstens einen zwischen dem Versorgungseingang und dem wenigstens einen Austauschanschluss angeordneten und dem oder einem Gleichstromsteller des Ladeterminals entsprechenden Gleichstromsteller um aus der elektrischen Leistung der Versorgungseinrichtung jeweils einen Stromstellerstrom zu erzeugen, wobei insbesondere
- der Gleichstromsteller des Zusatzstromterminals mit allen Austauschanschlüssen des Zusatzstromterminals verbunden ist, um den Stromstellerstrom an allen Austauschleitungen bereitzustellen.

3. Ladestation nach Anspruch 1 oder 2,
**dadurch gekennzeichnet, dass**
die Ladestation (100) wenigstens ein Versorgungsterminal (114) aufweist, zum Empfangen elektrischer Leistung von der Versorgungseinrichtung (104) und zum Weiterleiten an die Ladeterminals, und jedes Versorgungsterminal umfasst
- einen über eine Hauptversorgungsleitung (110) mit der Versorgungseinrichtung verbundenen Hauptversorgungseingang (112), um darüber Leistung von der Versorgungseinrichtung zu beziehen,
- wenigstens einen Versorgungsausgang, um darüber die von der Versorgungseinrichtung bezogene Leistung an die Ladeterminals und ggf. das wenigstens eine Zusatzstromterminal weiterzuleiten, insbesondere um Leistung an alle Ladeterminals weiterzuleiten, und wobei vorzugsweise
- den Austauschanschlüssen der Ladeterminals und ggf. des wenigstens einen Zusatzstromterminals entsprechende Austauschanschlüsse an einem ersten und zweiten Verbindungsbereich des Versorgungsterminals vorhanden sind, um an wenigstens einem Verbindungsbereich mit jeweils einem benachbarten Ladeterminal und/oder ggf. Zusatzstromterminal verbunden zu werden, um wenigstens einen Stromstellerstrom durch das Versorgungsterminal hindurchleiten zu können.

4. Ladestation nach einem der vorstehenden Ansprüche,
**dadurch gekennzeichnet, dass** die Ladeterminals, ggf. das wenigstens eine Zusatzstromterminal
- baugleiche Versorgungseingänge (200) aufweisen, so dass jeweils zwei der Versorgungseingänge miteinander verbunden werden, um dadurch jeweils elektrischen Versorgungsstrom bzw. einen Teil davon von einem Versorgungseingang zu einem benachbarten Versorgungseingang weiterzuleiten, so dass jedes Ladeterminal und ggf. jedes Zusatzstromterminal seinen Versorgungsstrom von einem benachbarten Ladeterminal, Zusatzstromterminal oder Versorgungsterminal erhält, und/oder dass
- die Versorgungseingänge und/oder die Austauschanschlüsse jeweils baugleiche Anschlussmittel (220, 224), insbesondere Steckverbinder aufweisen, um von den Ladeterminals, ggf. Zusatzstromterminals und dem Versorgungsterminal jeweils wahlweise zwei austauschbar miteinander zu verbinden, insbesondere so dass alle miteinander verbundenen Ladeterminals, ggf. Zusatzstromterminals und das Versorgungsterminal insgesamt einen modularen Aufbau bilden, insbesondere weist das Versorgungsterminaldazu angepasste Austauschanschlüsse und/oder Versorgungsausgänge auf.

5. Ladestation nach einem der vorstehenden Ansprüche,
**dadurch gekennzeichnet, dass**,
- genau n-1 Brückenschaltmittel vorgesehen sind, um jeweils zwei Querleitungen elektrisch zu verbinden, und/oder
- jede Querleitung zu dem Ladeschaltmittel kein weiteres Schaltmittel aufweist und/oder
- in jedem Ladeterminal eine Längsleitung mehr als Querleitungen vorgesehen sind, so dass gilt: m=n+1,
- eine Längsleitung in dem Ladeterminal
- mit zwei Querleitung jeweils über einen Verbindungsknoten direkt verbunden ist, mit einem der Brückenschaltmittel zwischen den beiden Verbindungsknoten, oder
- mit nur einer Querleitung über einen Verbindungsknoten verbunden ist, ohne in dem Ladeterminal ein Brückenschaltmittel aufzuweisen.

6. Ladestation nach einem der vorstehenden Ansprüche,
**dadurch gekennzeichnet, dass**
- wenigstens eine Steuereinheit vorgesehen ist, die dazu vorbereitet ist, die Ladeterminals (116) und/oder die Zusatzstromterminals (118) derart zu steuern, dass ein Ladestrom eines Ladeterminals aus einem Stromstellerstrom oder mehreren Stromstellerströmen gebildet werden kann, wobei
- der Ladestrom aus Stromstellerströmen von einem oder mehreren Gleichstromstellern desselben Ladeterminals und/oder aus Stromstellerströmen von einem oder mehreren Gleichstromstellern eines oder mehrerer anderer Ladeterminals gebildet wird.

7. Ladestation nach einem der vorstehenden Ansprüche,
**dadurch gekennzeichnet, dass**
- die Ladestation so aufgebaut ist, insbesondere über eine bzw. die wenigstens eine Steuereinheit derart ansteuerbar ist, dass
- die steuerbaren Schaltmittel derart geschaltet werden können, dass ein Ladestrom aus wenigstens 3 Stromstellerströmen, vorzugsweise wenigstens 5 Stromstellerströmen, insbesondere wenigstens 7 Stromstellerströmen gebildet werden kann.

8. Ladestation nach einem der vorstehenden Ansprüche,
**dadurch gekennzeichnet, dass**
- die Steuereinheit das Erzeugen der Ladeströme, insbesondere die Anzahl der an einem Ladeanschluss bereitgestellten Stromstellerströme, abhängig eines Steuerkriteriums steuern kann, ausgewählt aus der Liste aufweisend,
- ein Typ eines an den Ladeanschluss angeschlossen Elektrofahrzeugs,
- ein Speicherzustand des an den Ladeanschluss angeschlossen Elektrofahrzeugs,
- ein speicherzustandsabhängiger Strombedarf des angeschlossenen Elektrofahrzeugs,
- eine Stromanforderung des angeschlossenen Elektrofahrzeugs,
- ein von einem Benutzer angegebener Ladewunsch zum Laden des an den Ladeanschluss angeschlossen Elektrofahrzeugs und
- eine Anzahl verfügbarer Gleichstromsteller zum Erzeugen von Stromstellerströmen zum Zusammenfügen zum Erzeugung eines Ladestroms.

9. Verfahren zum Laden mehrerer Elektrofahrzeuge, insbesondere Elektroautomobile, mittels einer Ladestation, umfassend die Schritte:
- Versorgen der Ladestation mit elektrischer Leistung über eine Versorgungseinrichtung der Ladestation;
- Laden jeweils wenigstens eines Elektrofahrzeugs mittels eines von mehreren Ladeterminals der Ladestation mit den Schritten
- Beziehen elektrischer Leistung von der Versorgungseinrichtung an einem Versorgungseingang des Ladeterminals,
- Abgeben jeweils eines Ladestromes zum Laden des angeschlossenen Elektrofahrzeugs an einen Ladeausgang mit mehreren Ladeanschlüssen, wobei das Elektrofahrzeug an einem der Ladeanschlüsse angeschlossen ist, an den der Ladestrom abgegeben wird, und wobei
- mehrere zwischen dem Versorgungseingang und dem Ladeausgang angeordneter Gleichstromsteller aus elektrischer Leistung der Versorgungseinrichtung jeweils einen Stromstellerstrom erzeugt, und
- der Ladestrom aus einem Stromstellerstrom oder mehreren Stromstellerströmen gebildet wird, und wobei
- die Ladeterminals untereinander an Austauschanschlüssen über elektrische Austauschleitungen verbunden sind, und wahlweise
- darüber Stromstellerströme untereinander austauschen, **dadurch gekennzeichnet, dass**,
- jedes Ladeterminal einen ersten und einen zweiten Verbindungsbereich (204, 206) mit jeweils mehreren Austauschanschlüssen (224) aufweist,
-- für jeden Austauschanschluss einer der Verbindungsbereiche eine Längsleitung (LL1, LL2, LL3) vorgesehen ist, um den jeweiligen Austauschanschluss des einen Verbindungsbereiches (204) mit jeweils einem Austauschanschluss des anderen Verbindungsbereiches (206) elektrisch zu verbinden, so dass bei m Austauschanschlüssen des einen Verbindungsbereiches m Längsleitungen vorgesehen sind, die insbesondere elektrisch zueinander parallel verlaufen,
- jedem Gleichstromsteller (226) ein Ladeanschluss (222) zugeordnet ist und für jeden Gleichstromsteller eine Querleitung (QL1, QL2) vorgesehen ist, um den Gleichstromsteller mit dem Ladeanschluss zu verbinden, um den Stromstellerstrom an den zugeordneten Ladeanschluss zu übertragen, so dass bei n Gleichstromstellern n Querleitungen vorgesehen sind,
wobei
- jede Längsleitung über einen Verbindungsknoten mit wenigstens einer der Querleitungen direkt verbunden ist,
**dadurch gekennzeichnet, dass**
- jedes Ladeterminal wenigstens ein steuerbares Schaltmittel aufweist aus der Liste aufweisend
- ein Austauschschaltmittel (A1, A2, A3), das mit jeweils einem Austauschanschluss elektrisch verbunden ist, um den Austausch wenigstens eines Stromstellerstroms über das Austauschmittel mit einem benachbarten Ladeterminal oder Zusatzstromterminal zu steuern,
- ein Ladeschaltmittel (C1, C2), das mit jeweils einem Ladeanschluss elektrisch verbunden ist, um das Abgeben eines Ladestroms an den Ladeanschluss zu steuern, und
- ein Brückenschaltmittel (B1), das mit zwei Gleichstromstellern in einem Ladeterminal elektrisch verbunden ist, insbesondere über zwei Querleitungen, um eine Überlagerung der Stromstellerströme der beiden Gleichstromsteller zu steuern,
und dass
- die Ladestation (100) so aufgebaut ist, dass
- wenigstens ein Austauschschaltmittel eines Ladeterminals, an dem ein zu ladendes Elektrofahrzeug angeschlossen ist, geschlossen werden kann, um dadurch wenigstens einen Stromstellerstrom von wenigstens einem benachbarten Ladeterminal zu beziehen, um damit einen Ladestrom für das zu ladende Elektrofahrzeug zu erzeugen und/oder
- wenigstens ein Brückenschaltmittel des Ladeterminals an dem das Elektrofahrzeug angeschlossen ist, geschlossen werden kann, um dadurch mehrere Stromstellerströme aus mehreren in dem Ladeterminal angeordneten Gleichstromstromstellern zum Erzeugen des Ladestroms zusammen zu fügen, und/oder
- wenigstens ein Austauschschaltmittel wenigstens eines benachbarten oder weiteren Ladeterminals und/oder benachbarten oder weiteren Zusatzstromterminals geschlossen werden kann, um dadurch, wenigstens einen Stromstellerstrom aus benachbarten oder weiteren Ladeterminals oder Zusatzstromterminals zum Erzeugen des Ladestroms zu beziehen und zusammenzuführen und/oder
- wenigstens ein Brückenschaltmittel wenigstens eines benachbarten oder weiteren Ladeterminals geschlossen werden kann, um wenigstens einen Stromstellerstrom aus mehreren in dem benachbarten Ladeterminal angeordneten Gleichstromstellern zum Erzeugen des Ladestroms über wenigstens eine Austauschleitung zu beziehen,
**dadurch gekennzeichnet, dass**
- wenigstens ein Austauschschaltmittel und wenigstens ein Brückenschaltmittel so verschaltbar sind, dass
- ein Stromstellerstrom eines Gleichstromstellers eines ersten Ladeterminals oder des bzw. eines ersten Zusatzstromterminals über eine erste Längsleitung und das wenigstens eine Austauschschaltmittel in ein zweites Ladeterminal fließen kann,
- der Stromstellerstrom in dem zweiten Ladeterminal über einen ersten Verbindungsknoten und eine erste Querleitung zu einer zweiten Längsleitung fließen kann und
- der Stromstellerstrom über einen zweiten Verbindungsknoten, das wenigstens eine Brückenschaltmittel und einen dritten Verbindungsknoten zu einer zweiten Querleitung des zweiten Ladeterminals fließen kann,
- um dort mit wenigstens einem weiteren Stromstellerstrom zum Erzeugen eines Ladestroms zusammengeführt zu werden, insbesondere
- um ein an die zweite Querleitung angeschlossenes Elektrofahrzeug zu laden.

10. Verfahren nach Anspruch 9
**dadurch gekennzeichnet, dass**
- wenigstens ein Austauschschaltmittel eines Ladeterminals, an dem ein zu ladendes Elektrofahrzeug angeschlossen ist, geschlossen wird, und dadurch wenigstens ein Stromstellerstrom von wenigstens einem benachbarten Ladeterminal bezogen wird, und damit einen Ladestrom für das zu ladende Elektrofahrzeug erzeugt wird und/oder
- wenigstens ein Brückenschaltmittel des Ladeterminals an dem das Elektrofahrzeug angeschlossen ist, geschlossen ist, und dadurch mehrere Stromstellerströme aus mehreren in dem Ladeterminal angeordneten Gleichstromstromstellern zum Erzeugen des Ladestroms zusammengefügt bzw. überlagert werden, und/oder
- wenigstens ein Austauschschaltmittel wenigstens eines benachbarten oder weiteren Ladeterminals und/oder benachbarten oder weiteren Zusatzstromterminals geschlossen ist, und dadurch, wenigstens ein Stromstellerstrom aus benachbarten oder weiteren Ladeterminals oder Zusatzstromterminals zum Erzeugen des Ladestroms bezogen und zusammengeführt bzw. überlagert wird und/oder
- wenigstens ein Brückenschaltmittel wenigstens eines benachbarten oder weiteren Ladeterminals geschlossen ist, und dadurch wenigstens ein Stromstellerstrom aus mehreren in dem benachbarten Ladeterminal angeordneten Gleichstromstellern zum Erzeugen des Ladestroms über wenigstens eine Austauschleitung bezogen wird.

11. Verfahren nach Anspruch 9 oder 10,
**dadurch gekennzeichnet, dass** eine Ladestation nach einem der Ansprüche 2 bis 8 verwendet wird.

## Claims

1. A charging station (100) for the charging of a plurality of electric vehicles, specifically electric cars, comprising:
- a supply device (104), specifically for connecting to an electricity supply grid (102), in order to supply the charging station with electric power
- a plurality of charging terminals (116), each for charging at least one electric vehicle, wherein each charging terminal comprises
- a supply input (120) for the take-up of electric power from the supply device,
- a charging output (122) having a plurality of charging points, each for outputting a charging current for respectively charging a connected electric vehicle, and
- a plurality of DC current controller (126), arranged between the supply input and the charging output, for generating a respective current controller current from the electric power delivered by the supply device, wherein
- each charging current (I_{L1}, I_{L2}) is constituted by one current controller current or by a plurality of current controller currents (I_{S1}, I_{S2}, I_{S3}), and wherein
- the charging terminals are connected to one another at exchange terminals by way of electrical exchange lines (128) in order to exchange current controller currents with one another by way of the latter, **characterized in that**
- each charging terminal comprises a first and a second connection region (204, 206), each having a plurality, -of exchange terminals (224),
- for each exchange terminal of one of the connection regions, a longitudinal line (LL1, LL2, LL3) is provided, for the electrical connection of the respective exchange terminal of one connection region (204) with a respective exchange terminal of the other connection region (206), such that, in the event of m exchange terminals of one connection region, m longitudinal lines are provided, which are specifically electrically arranged in parallel with one another,
- a charging point (222) is assigned to each DC current controller (226) and, for each DC current controller, a transverse line (QL1, QL2) is provided, in order to connect the DC current controller to the charging point, for the transmission of current controller currents to the assigned charging point, such that, in the event of n DC current controllers, n transverse lines are provided,
wherein
- each longitudinal line is directly connected to at least one of the transverse lines at a connection node
**characterized in that**
- each charging terminal comprises at least one controllable switching means, from the list comprised of the following:
- an interchange switching means (A1, A2, A3), which is electrically connected in each case to an exchange terminal, in order to control the exchange of at least one current controller current with an adjoining charging terminal or an adjoining booster current terminal via said interchange means,
- a charging switching means (C1, C2), which is electrically connected in each case to a charging point, in order to control the output of a charging current on said charging point, and
- a bridge switching means (B1), which is electrically connected to two DC current controllers in a charging terminal, specifically via two transverse lines, in order to control a superimposition of the current controller currents of the two DC current controllers,
and that
- the charging station (100) is configured such that
- at least one interchange switching means of a charging terminal, to which an electric vehicle which is to be charged is connected, can be closed such that, as a result, at least one current controller current is drawn from at least one adjoining charging terminal, and a charging current is thus generated for the electric vehicle which is to be charged, and/or
- at least one bridge switching means of the charging terminal, to which the electric vehicle is connected, can be closed such that, as a result, a plurality of current controller currents from a plurality of DC current controllers which are arranged in the charging terminal can be combined for the generation of the charging current, and/or
- at least one interchange switching means of at least one adjoining or further charging terminal, and/or of adjoining or further booster current terminals is closed and, as a result, at least one current controller current is drawn from adjoining or further charging terminals or booster current terminals and combined for the generation of the charging current and/or
- at least one bridge switching means of at least one adjoining or further charging terminal can be closed, in order to draw at least one current controller current from the plurality of DC current controllers arranged in the adjoining charging terminal for the generation of the charging current, via at least one exchange line.
**characterized in that**
- at least one interchange switching means and at least one bridge switching means can be interconnected such that
- a current controller current from one DC current controller of a first charging terminal or of the or a first booster current terminal can flow via a first longitudinal line and the at least one interchange switching means into a second charging terminal,
- the current controller current in the second charging terminal can flow via a first connection node and a first transverse line to a second longitudinal line, and
- the current controller current can also flow via a second connection node, the at least one bridge switching means and a third connection node to a second transverse line of the second charging terminal,
- wherein it is combined with at least one further current controller current for the generation of a charging current, specifically
- for the charging of an electric vehicle which is connected to the second transverse line.

2. The charging station as claimed in claim 1,
**characterized in that**
the charging station (100) comprises at least one booster current terminal (118) for the generation of one or more booster current controller currents, which are then delivered to at least one charging terminal, wherein the booster current terminal itself comprises no charging output, and wherein each booster current terminal comprises
- a supply input, corresponding to the supply input of a charging terminal, for the take-up of electric power from the supply device,
- at least one exchange terminal, corresponding to the exchange terminal of a charging terminal, for the transmission of current controller currents to at least one of the charging terminals, and
- at least one DC current controller arranged between the supply input and the at least one exchange terminal, corresponding to the or a DC current controller of the charging terminal, in order to permit the generation of a respective current controller current from the electric power of the supply device, wherein, specifically
- the DC current controller of the booster current terminal is connected to all the exchange terminals of the booster current terminal, in order to permit the delivery of current controller current to all the exchange lines.

3. The charging station as claimed in claim 1 or 2,
**characterized in that**
the charging station (100) comprises at least one supply terminal (114) for the reception of electric power from the supply device (104) and the relaying thereof to the charging terminals, wherein each supply terminal comprises
- a main supply input (112), which is connected to the supply device via a main supply line (110), for the take-up of power from the supply device,
- at least one supply output, for the relaying of power drawn from the supply device to the charging terminals and, optionally, to the at least one booster current terminal, specifically for the relaying of power to all the charging terminals, and wherein, preferably
- exchange terminals corresponding to the exchange terminals of the charging terminals and, optionally, of the at least one booster current terminal are arranged on a first and second connection region of the supply terminal, in order to connect at least one connection region to one respectively adjoining charging terminal and/or, optionally, a booster current terminal, in order to permit the channeling of at least one current controller current through the supply terminal.

4. The charging station as claimed in one of the preceding claims,
**characterized in that** the charging terminals and, optionally, the at least one booster current terminal
- comprise supply inputs (200) of identical design such that, in each case, two of the supply inputs can be interconnected such that, in each case, the electric supply current, or a proportion thereof, is relayed from one supply input to an adjoining supply input, such that each charging terminal and, optionally, each booster current terminal receives its supply current from an adjoining charging terminal, a booster current terminal or supply terminal, and/or **in that**
- the supply inputs and/or the exchange terminals each comprise connection means (220, 224) of identical design, specifically plug connectors, for the mutually interchangeable connection of two selected charging terminals or, optionally, booster current terminals and the supply terminal respectively, specifically such that all the mutually connected charging terminals or, optionally, booster current terminals and the supply terminal, in combination, are configured with a modular design, specifically wherein the supply terminal incorporates appropriate exchange terminals and/or supply outputs for this purpose.

5. The charging station as claimed in one of the preceding claims,
**characterized in that**
- exactly n-1 bridge switching means are provided, each for the electrical connection of two transverse lines, and/or
- each transverse line to the charging switching means comprises no further switching means, and/or
- in each charging terminal, one more longitudinal line than the number of transverse lines is provided, such that: m=n+1,
- one longitudinal line in the charging terminal
- is directly connected to two transverse lines via one connection node respectively, by means of one of the bridge switching means between the two connection nodes, or
- is connected to only one transverse line via one connection node, wherein no bridge switching means is incorporated in the charging terminal.

6. The charging station as claimed in one of the preceding claims,
**characterized in that**
- at least one control unit is provided, which is configured to control the charging terminals (116) and/or the booster current terminals (118), such that a charging current on one charging terminal can be constituted by one current controller current, or by a plurality of current controller currents, wherein
- the charging current is constituted by current controller currents from one or more DC current controllers of the same charging terminal, and/or by current controller currents from one or more DC current controllers of one or more further charging terminals.

7. The charging station as claimed in one of the preceding claims,
**characterized in that**
- the charging station is designed such that the latter, specifically by means of a or the at least one control unit, can be actuated such that
- the controllable switching means can be switched such that a charging current can be constituted from at least three current controller currents, preferably at least five current controller currents, and specifically at least seven current controller currents.

8. The charging station as claimed in one of the preceding claims,
**characterized in that**
- the control unit can control the generation of charging currents, and specifically the number of current controller currents delivered to a charging point, in accordance with a control criterion, selected from the list comprising the following:
- a type of electric vehicle connected to the charging point;
- a storage state of the electric vehicle connected to the charging point;
- a storage state-dependent current demand of the connected electric vehicle;
- a current demand of the connected electric vehicle;
- a charging instruction issued by the user for the charging of the electric vehicle which is connected to the charging point, and
- a number of available DC current controllers for the generation of current controller currents to be combined for the generation of a charging current.

9. A method for the charging of a plurality of electric vehicles, specifically electric cars, by means of a charging station, comprising the following steps:
- supply of the charging station with electric power by means of a supply device of the charging station;
- the charging of at least one electric vehicle respectively by means of one of a plurality of charging terminals of the charging station, by the following steps:
- the take-up of electric power from the supply device at one supply input of the charging terminal,
- the output of one charging current respectively for the charging of the connected electric vehicle at a charging output having a plurality of charging points, wherein the electric vehicle is connected to one of the charging points at which an output of charging current is delivered, and wherein
- a plurality of DC current controller arranged between the supply input and the charging output generates a respective current controller current from the electric power of the supply device, and
- the charging current is constituted from one current controller current or a plurality of current controller currents, and wherein
- the charging terminals are mutually interconnected at exchange terminals, via electric exchange lines, and optionally
- execute the mutual exchange of current controller currents by means thereof
**characterized in that**
- each charging terminal comprises a first and a second connection region (204, 206), each having a plurality of exchange terminals (224),
- for each exchange terminal of one of the connection regions, a longitudinal line (LL1, LL2, LL3) is provided, for the electrical connection of the respective exchange terminal of one connection region (204) with a respective exchange terminal of the other connection region (206), such that, in the event of m exchange terminals of one connection region, m longitudinal lines are provided, which are specifically electrically arranged in parallel with one another,
- a charging point (222) is assigned to each DC current controller (226) and, for each DC current controller, a transverse line (QL1, QL2) is provided, in order to connect the DC current controller to the charging point, for the transmission of current controller currents to the assigned charging point, such that, in the event of n DC current controllers, n transverse lines are provided,
wherein
- each longitudinal line is directly connected to at least one of the transverse
lines at a connection node
**characterized in that**
- each charging terminal comprises at least one controllable switching means, from the list comprised of the following:
- an interchange switching means (A1, A2, A3), which is electrically connected in each case to an exchange terminal, in order to control the exchange of at least one current controller current with an adjoining charging terminal or an adjoining booster current terminal via said interchange means,
- a charging switching means (C1, C2), which is electrically connected in each case to a charging point, in order to control the output of a charging current on said charging point, and
- a bridge switching means (B1), which is electrically connected to two DC current controllers in a charging terminal, specifically via two transverse lines, in order to control a superimposition of the current controller currents of the two DC current controllers,
and that
- the charging station (100) is configured such that
- at least one interchange switching means of a charging terminal, to which an electric vehicle which is to be charged is connected, can be closed such that, as a result, at least one current controller current is drawn from at least one adjoining charging terminal, and a charging current is thus generated for the electric vehicle which is to be charged, and/or
- at least one bridge switching means of the charging terminal, to which the electric vehicle is connected, can be closed such that, as a result, a plurality of current controller currents from a plurality of DC current controllers which are arranged in the charging terminal can be combined for the generation of the charging current, and/or
- at least one interchange switching means of at least one adjoining or further charging terminal, and/or of adjoining or further booster current terminals is closed and, as a result, at least one current controller current is drawn from adjoining or further charging terminals or booster current terminals and combined for the generation of the charging current and/or
- at least one bridge switching means of at least one adjoining or further charging terminal can be closed, in order to draw at least one current controller current from the plurality of DC current controllers arranged in the adjoining charging terminal for the generation of the charging current, via at least one exchange line
**characterized in that**
- at least one interchange switching means and at least one bridge switching means can be interconnected such that
- a current controller current from one DC current controller of a first charging terminal or of the or a first booster current terminal can flow via a first longitudinal line and the at least one interchange switching means into a second charging terminal,
- the current controller current in the second charging terminal can flow via a first connection node and a first transverse line to a second longitudinal line, and
- the current controller current can also flow via a second connection node, the at least one bridge switching means and a third connection node to a second transverse line of the second charging terminal,
- wherein it is combined with at least one further current controller current for the generation of a charging current, specifically
- for the charging of an electric vehicle which is connected to the second transverse line.

10. The method as claimed in claim 9,
**characterized in that**
- at least one interchange switching means of a charging terminal, to which an electric vehicle which is to be charged is connected, is closed and, as a result, at least one current controller current is drawn from at least one adjoining charging terminal, such that a charging current is generated for the electric vehicle which is to be charged, and/or
- at least one bridge switching means of the charging terminal to which the electric vehicle is connected is closed and, as a result, a plurality of current controller currents from a plurality of DC current controllers arranged in the charging terminal are combined or superimposed for the generation of the charging current, and/or
- at least one interchange switching means of at least one adjoining or further charging terminal, and/or of adjoining or further booster current terminals is closed and, as a result, at least one current controller current is drawn from adjoining or further charging terminals or booster current terminals for the generation of the charging current, and is combined or superimposed, and/or
- at least one bridge switching means of at least one adjoining or further charging terminal is closed and, as a result, at least one current controller current from the plurality of DC current controllers arranged in the adjoining charging terminal is drawn for the generation of the charging current via at least one exchange line.

11. Method as claimed in claim 9 or 10
**characterized in that** a charging station as claimed in one of claims 2 to 8 is employed.

## Revendications

1. Station de charge (100) pour charger plusieurs véhicules électriques, en particulier des automobiles électriques, comprenant :
- un dispositif d'alimentation (104), destiné en particulier à être branché à un réseau d'alimentation électrique (102), pour l'alimentation de la station de charge en puissance électrique,
- plusieurs terminaux de charge (116) pour charger respectivement au moins un véhicule électrique et chaque terminal de charge comprenant
- - une entrée d'alimentation (120) pour fournir de la puissance électrique provenant du dispositif d'alimentation,
- - une sortie de charge (122) avec plusieurs bornes de charge pour distribuer respectivement un courant de charge pour charger respectivement un véhicule électrique branché, et
- - plusieurs convertisseurs de tension continue (126) disposés entre l'entrée d'alimentation et la sortie de charge pour produire respectivement un courant de convertisseur de courant à partir de la puissance électrique du dispositif d'alimentation, dans laquelle
- - chaque courant de charge (IL1, IL2) est obtenu à partir d'un courant de convertisseur de courant ou de plusieurs courants de convertisseur de courant (IS1, IS2, IS3), et dans laquelle
- - les terminaux de charge sont reliés entre eux sur des bornes d'échange par l'intermédiaire de lignes d'échange électriques (128) pour échanger entre eux par cet intermédiaire des courants de convertisseur de courant, **caractérisé en ce que**
- - chaque terminal de charge présente une première et une deuxième zone de liaison (204, 206) avec respectivement plusieurs bornes d'échange (224),
- - pour chaque borne d'échange d'une des zones de liaison, une ligne longitudinale (LL1, LL2, LL3) est prévue pour relier électriquement la borne d'échange respective d'une zone de liaison (204) à respectivement une borne d'échange de l'autre zone de liaison (206) de telle sorte que pour m bornes d'échange d'une zone de liaison, m lignes longitudinales sont prévues, qui s'étendent en particulier en parallèle les unes par rapport aux autres électriquement,
- - une borne de charge (222) est associée à chaque convertisseur de courant continu (226) et une ligne transversale (QL1, QL2) est prévue pour chaque convertisseur de courant continu pour relier le convertisseur de courant continu à la borne de charge pour transmettre le courant de convertisseur de courant à la borne de charge associée de sorte que pour n convertisseurs de courant continu, n lignes transversales sont prévues,
dans laquelle
- - chaque ligne longitudinale est reliée directement à au moins une des lignes transversales par l'intermédiaire d'un nœud de liaison,
**caractérisée en ce que**
- - chaque terminal de charge présente au moins un moyen de commutation pouvant être commandé issu de la liste présentant
- - - un moyen de commutation d'échange (A1, A2, A3), qui est relié électriquement à respectivement une borne d'échange pour commander l'échange d'au moins un courant de convertisseur de courant par l'intermédiaire du moyen d'échange par un terminal de charge ou un terminal de courant supplémentaire adjacent,
- - - un moyen de commutation de charge (C1, C2), qui est relié électriquement à respectivement une borne de charge pour commander la distribution d'un courant de charge à la borne de charge, et
- - - un moyen de commutation de pont (B1), qui est relié électriquement à deux convertisseurs de courant continu dans un terminal de charge, en particulier par l'intermédiaire de deux lignes transversales, pour commander une superposition des courants de convertisseur de courant des deux convertisseurs de courant continu,
et que
- - la station de charge (100) présente une structure telle que
- - - au moins un moyen de commutation d'échange d'un terminal de charge, sur lequel un véhicule électrique à charger est branché, peut être fermé pour ainsi fournir au moins un courant de convertisseur de courant d'au moins un terminal de charge adjacent pour générer ainsi un courant de charge pour le véhicule électrique à charger, et/ou
- - - au moins un moyen de commutation de pont du terminal de charge, sur lequel le véhicule électrique est branché, peut être fermé pour assembler ainsi plusieurs courants de convertisseur de courant à partir de plusieurs convertisseurs de courant continu disposés dans le terminal de charge pour générer le courant de charge, et/ou
- - - au moins un moyen de commutation d'échange d'au moins un terminal de charge adjacent ou supplémentaire et/ou d'au moins un terminal de courant supplémentaire adjacent ou supplémentaire peut être fermé pour ainsi fournir et/ou assembler au moins un courant de convertisseur de courant à partir de terminaux de charge ou terminaux de courant supplémentaire adjacents ou supplémentaires pour générer le courant de charge, et/ou
- - - au moins un moyen de commutation de pont d'au moins un terminal de charge adjacent ou supplémentaire peut être fermé pour fournir au moins un courant de convertisseur de courant à partir de plusieurs convertisseurs de courant continu disposés dans le terminal de charge adjacent pour fournir le courant de charge par l'intermédiaire d'au moins une ligne d'échange,
**caractérisée en ce que**
- au moins un moyen de commutation d'échange et au moins un moyen de commutation de pont peuvent être couplés de telle sorte que
- - un courant de convertisseur de courant d'un convertisseur de courant continu d'un premier terminal de charge ou du ou d'un premier terminal de courant supplémentaire peut s'écouler dans un deuxième terminal de charge par l'intermédiaire d'une première ligne longitudinale et de l'au moins un moyen de commutation d'échange,
- - le courant de convertisseur de courant peut s'écouler dans le deuxième terminal de charge par l'intermédiaire d'un premier nœud de liaison et d'une première ligne transversale vers une deuxième ligne longitudinale, et
- - le courant de convertisseur de courant peut s'écouler par l'intermédiaire d'un deuxième nœud de liaison, de l'au moins un moyen de commutation de pont et d'un troisième nœud de liaison vers une deuxième ligne transversale du deuxième terminal de charge,
- - pour y être assemblé à au moins un courant de convertisseur de courant supplémentaire pour générer un courant de charge, en particulier
- - pour charger un véhicule électrique branché sur la deuxième ligne transversale.

2. Station de charge selon la revendication 1,
**caractérisée en ce que**
la station de charge (100) présente au moins un terminal de courant supplémentaire (118) pour produire un ou plusieurs courants de convertisseur de courant additionnels pour fournir celui-ci au moins à un terminal de charge, dans laquelle le terminal de courant supplémentaire ne présente lui-même aucune sortie de charge et chaque terminal de courant supplémentaire comprend
- une entrée d'alimentation correspondant à l'entrée d'alimentation d'un terminal de charge pour fournir de la puissance électrique provenant du dispositif d'alimentation,
- au moins une borne d'échange correspondant à la borne d'échange d'un terminal de charge pour transmettre des courants de convertisseur de courant à au moins un des terminaux de charge, et
- au moins un convertisseur de courant continu disposé entre l'entrée d'alimentation et l'au moins une borne d'échange et correspondant au ou à un convertisseur de courant continu du terminal de charge pour produire à partir de la puissance électrique du dispositif d'alimentation respectivement un courant de convertisseur de courant, dans laquelle en particulier
- le convertisseur de courant continu du terminal de courant supplémentaire est relié à toutes les bornes d'échange du terminal de courant supplémentaire pour fournir le courant de convertisseur de courant à toutes les lignes d'échange.

3. Station de charge selon la revendication 1 ou 2,
**caractérisée en ce que**
la station de charge (100) présente au moins un terminal d'alimentation (114) pour recevoir de la puissance électrique du dispositif d'alimentation (104) et pour la transférer aux terminaux de charge, et chaque terminal d'alimentation comprend
- une entrée d'alimentation principale (112) reliée au dispositif d'alimentation par l'intermédiaire d'une ligne d'alimentation principale (110) pour fournir par cet intermédiaire de la puissance du dispositif d'alimentation,
- au moins une sortie d'alimentation pour transférer par cet intermédiaire la puissance fournie par le dispositif d'alimentation aux terminaux de charge et éventuellement à l'au moins un terminal de courant supplémentaire, en particulier pour transférer de la puissance à tous les terminaux de charge, et dans laquelle de préférence
- des bornes d'échange correspondant aux bornes d'échange des terminaux de charge et éventuellement de l'au moins un terminal de courant supplémentaire sont présentes sur une première et une deuxième zone de liaison du terminal d'alimentation pour être reliées sur au moins une zone de liaison à respectivement un terminal de charge et/ou éventuellement un terminal de courant supplémentaire adjacent pour pouvoir acheminer à travers le terminal d'alimentation au moins un courant de convertisseur de courant.

4. Station de charge selon l'une quelconque des revendications précédentes,
**caractérisée en ce que** les terminaux de charge, éventuellement l'au moins un terminal de courant supplémentaire
- présentent des entrées d'alimentation (200) de même structure de sorte que respectivement deux des entrées d'alimentation sont reliées l'une à l'autre pour transférer ainsi respectivement du courant d'alimentation électrique ou une partie de celui-ci depuis une entrée d'alimentation vers une entrée d'alimentation adjacente de sorte que chaque terminal de charge et éventuellement chaque terminal de courant supplémentaire reçoit son courant d'alimentation depuis un terminal de charge, un terminal de courant supplémentaire ou un terminal d'alimentation adjacent, et/ou que
- les entrées d'alimentation et/ou les bornes d'échange présentent respectivement des moyens de raccordement (220, 224), en particulier des connecteurs enfichables, de même structure pour relier entre deux de manière échangeable parmi les terminaux de charge, éventuellement les terminaux de courant supplémentaire et le terminal d'alimentation, respectivement aux choix deux de ceux-ci, en particulier de telle sorte que tous les terminaux de charge, éventuellement les terminaux de courant supplémentaire et le terminal d'alimentation reliés entre eux forment globalement une structure modulaire, en particulier le terminal d'alimentation présente des bornes d'échange et/ou des sorties d'alimentation adaptées.

5. Station de charge selon l'une quelconque des revendications précédentes,
**caractérisée en ce que**
- précisément n-1 moyens de commutation de pont sont prévus pour relier électriquement respectivement deux lignes transversales, et/ou
- chaque ligne transversale vers le moyen de commutation de charge ne présente aucun moyen de commutation supplémentaire, et/ou
- une quantité de lignes longitudinales plus importante que les lignes transversales est prévue dans chaque terminal de charge de sorte que s'applique : m = n + 1,
- une ligne longitudinale dans le terminal de charge
- - est reliée directement à deux lignes transversales respectivement par l'intermédiaire d'un nœud de liaison, avec un des moyens de commutation de pont entre les deux nœuds de liaison, ou
- - est reliée à seulement une ligne transversale par l'intermédiaire d'un nœud de liaison sans présenter dans le terminal de charge un moyen de commutation de pont.

6. Station de charge selon l'une quelconque des revendications précédentes,
**caractérisée en ce que**
- au moins une unité de commande est prévue, qui est préparée pour commander les terminaux de charge (116) et/ou les terminaux de courant supplémentaire (118) de telle manière qu'un courant de charge d'un terminal de charge peut être obtenu à partir d'un courant de convertisseur de courant ou de plusieurs courants de convertisseur de courant, dans laquelle
- le courant de charge est obtenu à partir de courants de convertisseur de courant d'un ou de plusieurs convertisseurs de courant continu du même terminal de charge et/ou à partir de courants de convertisseur de courant d'un ou de plusieurs convertisseurs de courant continu d'un ou de plusieurs autres terminaux de charge.

7. Station de charge selon l'une quelconque des revendications précédentes,
**caractérisée en ce que**
- la station de charge présente une structure telle en particulier peut être pilotée par l'intermédiaire d'une ou de l'au moins une unité de commande de telle manière que
- les moyens de commutation pouvant être commandés peuvent être commutés de telle manière qu'un courant de charge peut être obtenu à partir d'au moins 3 courants de convertisseur de courant, de préférence d'au moins 5 courants de convertisseur de courant, en particulier d'au moins 7 courants de convertisseur de courant.

8. Station de charge selon l'une quelconque des revendications précédentes,
**caractérisée en ce que**
- l'unité de commande peut commander la production des courants de charge, en particulier le nombre des courants de convertisseur de courant fournis sur une borne de charge, en fonction d'un critère de commande, choisi parmi la liste présentant,
- un type d'un véhicule électrique branché sur la borne de charge,
- un état de stockage du véhicule électrique branché sur la borne de charge,
- un besoin en courant dépendant de l'état de stockage du véhicule électrique branché,
- une demande de courant du véhicule électrique branché,
- un souhait de charge indiqué par un utilisateur pour charger le véhicule électrique branché sur la borne de charge, et
- un nombre de convertisseurs de courant continu disponibles pour produire des courants de convertisseur de courant à assembler pour produire un courant de charge.

9. Procédé pour charger plusieurs véhicules électriques, en particulier des automobiles électriques, au moyen d'une station de charge, comprenant les étapes :
- d'alimentation de la station de charge en puissance électrique par l'intermédiaire d'un dispositif d'alimentation de la station de charge ;
- de charge de respectivement au moins un véhicule électrique au moyen d'un des plusieurs terminaux de charge de la station de charge avec les étapes
- - de fourniture de puissance électrique provenant du dispositif d'alimentation sur une entrée d'alimentation du terminal de charge,
- - de distribution de respectivement un courant de charge pour charger le véhicule électrique branché sur une sortie de charge avec plusieurs bornes de charge, dans lequel le véhicule électrique est branché sur une des bornes de charge, sur lesquelles le courant de charge est distribué, et dans lequel
- - plusieurs convertisseurs de courant continu disposés entre l'entrée d'alimentation et la sortie de charge produisent respectivement un courant de convertisseur de courant à partir d'une puissance électrique du dispositif d'alimentation, et
- - le courant de charge est obtenu à partir d'un courant de convertisseur de courant ou de plusieurs courants de convertisseur de courant, et dans lequel
- - les terminaux de charge sont reliés entre eux sur des bornes d'échange par l'intermédiaire de lignes d'échange électriques, et au choix
- - des courants de convertisseur de courant sont échangés par cet intermédiaire entre eux, **caractérisé en ce que**
- - chaque terminal de charge présente une première et une deuxième zone de liaison (204, 206) avec respectivement plusieurs bornes d'échange (224),
- - une ligne longitudinale (LL1, LL2, LL3) est prévue pour chaque borne d'échange d'une des zones de liaison pour relier électriquement la borne d'échange respective d'une zone de liaison (204) à respectivement une borne d'échange de l'autre zone de liaison (206) de telle sorte que pour m bornes d'échange d'une zone de liaison, m lignes longitudinales sont prévues, qui s'étendent en particulier en parallèle les unes par rapport aux autres électriquement,
- - une borne de charge (222) est associée à chaque convertisseur de courant continu (226) et une ligne transversale (QL1, QL2) est prévue pour chaque convertisseur de courant continu pour relier le convertisseur de courant continu à la borne de charge pour transmettre le courant de convertisseur de courant à la borne de charge associée de sorte que pour n convertisseurs de courant continu, n lignes transversales sont prévues,
dans lequel
- - chaque ligne longitudinale est reliée directement par l'intermédiaire d'un nœud de liaison à au moins une des lignes transversales,
**caractérisé en ce que**
- - chaque terminal de charge présente au moins un moyen de commutation pouvant être commandé, issu de la liste présentant
- - - un moyen de commutation d'échange (A1, A2, A3), qui est relié électriquement à respectivement une borne d'échange pour commander l'échange d'au moins un courant de convertisseur de courant par l'intermédiaire du moyen d'échange par un terminal de charge ou terminal de courant supplémentaire adjacent,
- - - un moyen de commutation de charge (C1, C2), qui est relié électriquement à respectivement une borne de charge pour commander la distribution d'un courant de charge à la borne de charge, et
- - - un moyen de commutation de pont (B1), qui est relié électriquement dans un terminal de charge à deux convertisseurs de courant continu, en particulier par l'intermédiaire de deux lignes transversales, pour commander une superposition des courants de convertisseur de courant des deux convertisseurs de courant continu,
et que
- - la station de charge (100) présente une structure telle que
- - - au moins un moyen de commutation d'échange d'un terminal de charge, sur lequel un véhicule électrique à charger est branché, peut être fermé pour fournir ainsi au moins un courant de convertisseur de courant d'au moins un terminal de charge adjacent pour produire ainsi un courant de charge pour le véhicule électrique à charger, et/ou
- - - au moins un moyen de commutation de pont du terminal de charge, sur lequel le véhicule électrique est raccordé, peut être fermé pour assembler ainsi plusieurs courants de convertisseur de courant à partir de plusieurs convertisseurs de courant continu disposés dans le terminal de charge pour produire le courant de charge, et/ou
- - - au moins un moyen de commutation d'échange d'au moins un terminal de charge adjacent ou supplémentaire et/ou de terminaux de courant supplémentaire adjacents ou supplémentaires peut être fermé pour ainsi fournir et assembler ainsi au moins un courant de convertisseur de courant à partir de terminaux de charge ou de terminaux de courant supplémentaire adjacents ou supplémentaires pour produire le courant de charge, et/ou
- - au moins un moyen de commutation de pont d'au moins un terminal de charge adjacent ou supplémentaire peut être fermé pour fournir par l'intermédiaire d'au moins une ligne d'échange au moins un courant de convertisseur de courant provenant de plusieurs convertisseurs de courant continu disposés dans le terminal de charge adjacent,
**caractérisé en ce que**
- au moins un moyen de commutation d'échange et au moins un moyen de commutation de pont peuvent être couplés de telle sorte que
- - un courant de convertisseur de courant d'un convertisseur de courant continu d'un premier terminal de charge ou du ou d'un premier terminal de courant supplémentaire peut s'écouler dans un deuxième terminal de charge par l'intermédiaire d'une première ligne longitudinale et de l'au moins un moyen de commutation d'échange,
- - le courant de convertisseur de courant peut s'écouler dans le deuxième terminal de charge par l'intermédiaire d'un premier nœud de liaison et d'une première ligne transversale vers une deuxième ligne longitudinale, et
- - le courant de convertisseur de courant peut s'écouler par l'intermédiaire d'un deuxième nœud de liaison, de l'au moins un moyen de commutation de pont et d'un troisième nœud de liaison vers une deuxième ligne transversale du deuxième terminal de charge,
- - pour y être assemblé à au moins un autre courant de convertisseur de courant pour produire un courant de charge, en particulier
- - pour charger un véhicule électrique branché sur la deuxième ligne transversale.

10. Procédé selon la revendication 9,
**caractérisé en ce que**
- au moins un moyen de commutation d'échange d'un terminal de charge, sur lequel un véhicule électrique à charger est branché, est fermé, et ainsi au moins un courant de convertisseur de courant est fourni par au moins un terminal de charge adjacent et ainsi un courant de charge est produit pour le véhicule électrique à charger, et/ou
- au moins un moyen de commutation de pont du terminal de charge, sur lequel le véhicule électrique est branché, est fermé et ainsi plusieurs courants de convertisseur de courant provenant de plusieurs convertisseurs de courant continu disposés dans le terminal de charge sont assemblés ou superposés pour produire le courant de charge, et/ou
- au moins un moyen de commutation d'échange d'au moins un terminal de charge adjacent ou supplémentaire et/ou de terminaux de courant supplémentaire adjacents ou supplémentaires, est fermé et ainsi au moins un courant de convertisseur de courant provenant de terminaux de charge ou de terminaux de courant supplémentaire adjacents ou supplémentaires est fourni et assemblé ou superposé pour produire le courant de charge, et/ou
- au moins un moyen de commutation de pont d'au moins un terminal de charge adjacent ou supplémentaire est fermé, et ainsi au moins un courant de convertisseur de courant provenant de plusieurs convertisseurs de courant continu disposés dans le terminal de charge adjacent est fourni pour produire le courant de charge par l'intermédiaire d'au moins une ligne d'échange.

11. Procédé selon la revendication 9 ou 10, **caractérisé en ce qu'**une station de charge selon l'une quelconque des revendications 2 à 8 est utilisée.
